# EUROPEAN PATENT APPLICATION

(11) **EP 2 320 323 A1**
(43) Date of publication of application: **11.05.2011**
(21) Application number: 09820635.2
(22) Date of filing: 16.10.2009
(51) Int. Cl.: G06F 13/00, G06F 3/048, G06F 3/14, H04M 11/00

(54) **COMMUNICATION TERMINAL DEVICE, COMMUNICATION METHOD, AND COMMUNICATION PROGRAM**

(30) Priority: 16.10.2008 JP 2008267751; 15.10.2009 JP 2009238207
(71) Applicant: Sharp Kabushiki Kaisha, Osaka-shi, Osaka 545-8522 (JP)
(72) Inventor: HIROSHIMA, Tadashi, Osaka 545-8522 (JP); TAGAKI, Fumihiko, Osaka 545-8522 (JP); OKAMOTO, Shuji, Osaka 545-8522 (JP); YAMAMOTO, Masaki, Osaka 545-8522 (JP); KUMAGAI, Masayuki, Osaka 545-8522 (JP)
(74) Representative: Treeby, Philip David William
(86) International application number: PCT/JP2009/067896
(87) International publication number: WO 2010/044457

(57) **Abstract**

A communication terminal device (100) includes: a display (107) for displaying image information; a communication device (101) for transmitting and receiving information to and from another terminal via a network; an input device (119) for entering command information and image information, and a processor (106) configured to perform a first control for causing the display to show, based on input of first command information from the input device during display of a first image, a second image, and transmitting first information to the other terminal via the communication device and perform a second control for causing the display to show the first image based on input of second command information from the input device during display of the second image, and transmitting second information to the other terminal via the communication device.

## Description

### TECHNICAL FIELD

The present invention relates to a communication terminal device, communication method, and communication program, capable of connection with another terminal via a network. Particularly, the present invention relates to a communication terminal device, communication method, and communication program transferring information with another terminal in real time.

### BACKGROUND ART

Conventional handwriting communication applications allowing users to draw at the same time through each of his/her communication terminal are known. In such handwriting communication applications, each communication terminal provides a display of the handwritten image based on its accepted handwriting input, and transmits handwriting information corresponding to the handwriting input to the terminal of the other party. Each communication terminal receives handwriting information from the companion terminal, and provides a display of the handwritten image based on the handwriting information.

For example, Japanese Patent Laying-Open No. 2001-111708 (Patent Document 1) discloses a portable information communication device. According to Japanese Patent Laying-Open No. 2001-111708 (Patent Document 1), the portable information communication terminal is characterized in the configuration of transmitting sequentially the coordinate information of handwriting data entered by a user using input means such as a liquid crystal display-integral tablet to a portable information communication terminal at the other connection side, displaying the track of the entered handwriting data on the display means such as a liquid crystal display, and at the same time, allowing the track of the received handwriting data to be displayed on the display means based on the coordinate information of the handwritten data sent from the portable information communication device of the communication party. This configuration allows transmission and reception of handwritten data in real time using a portable terminal device. Conversation-type communication such as by handwriting can be realized regardless of where the users are.

Japanese Patent Laying-Open No. 2003-234842 (Patent Document 2) discloses a real-time handwriting communication system. According to Japanese Patent Laying-Open No. 2003-234842 (Patent Document 2), the real-time handwriting communication system includes a touch panel, a touch pen, a data input device, a controller device, a data output device, and a display device. Handwriting data is entered with a touch pen, and converted into output data. The data input device receives and inputs data transmitted from another real time handwriting communication system. The controller device is connected with the touch panel and data input device to process and transmit in real time the input data and output data. The data output device is connected to a controller device to transmit the output data to another real time handwriting communication system. The display device displays the input data and output data.

Japanese Patent Laying-Open No. 2001-333204 (Patent Document 3) discloses a portable terminal device. According to Japanese Patent Laying-Open No. 2001-333204 (Patent Document 3), the portable terminal device includes handwriting data display means capable of color display, handwriting input means provided at the surface of the handwriting data display means, handwriting data storage means for storing a plurality of handwriting data including handwriting data input through the handwriting input means, data display manager means for dividing the plurality of handwriting data stored in the handwriting data storage means into colors for display on the same screen, handwriting data storage means for storing handwriting data input through the handwriting data input means and the handwriting data of the other-party terminal, and data communication means for transmitting in real time its own handwritten data stored in the handwriting data storage means to the terminal of the other party, and receiving and writing into the handwriting data storage means the handwriting data from the terminal of the other party.

Japanese Patent Laying-Open No. 2004-221842 (Patent Document 4) discloses a communication system and a terminal device thereof. According to Japanese Patent Laying-Open No. 2004-221842 (Patent Document 4), session control means performs voice conversation, as well as image and handwriting data communication without requiring permission from the receiver side. Image/handwriting data manager means includes a plurality of planes to display image data that becomes the base on one of the planes, display the handwriting data currently in communication on another plane, and display the plurality of planes in an overlapping manner. The image data transmission control means/reception control means switches the suitable name and/or data contents for the image data taken as the base for transmission and reception. At the display control means, the image data that becomes the base and the coordinate system of the handwriting data are rendered available, and the position indicative of the handwriting data are exchanged between the terminal devices, followed by scrolling such that the image data that becomes the base and the handwriting data are displayed at the display means.

Japanese Patent Laying-Open No. 2004-234594 (Patent Document 5) discloses a photo communication system. According to Japanese Patent Laying-Open No. 2004-234594 (Patent Document 5), a pair of information communication terminals includes image input means for receiving image data from a memory card or the like of a digital camera, data recording means for recording image data and the like, input means for performing a command input by the user, image display means for displaying a recorded image or the like, data communication means for transferring data such as a recorded image with another terminal, and control means for controlling the execution of the terminal. The system is configured such that a handwritten result including an image can be displayed in real time at one information communication terminal by writing a handwriting graphic element through input means overlapping on the image display means while both users are looking at the image displayed on the image display means at his/her information communication terminal.

### Prior Art Document

### Patent Document

Patent Document 1: Japanese Patent Laying-Open No. 2001-111708
Patent Document 2: Japanese Patent Laying-Open No. 2003-234842
Patent Document 3: Japanese Patent Laying-Open No. 2001-333204
Patent Document 4: Japanese Patent Laying-Open No. 2004-221842
Patent Document 5: Japanese Patent Laying-Open No. 2004-234594

### SUMMARY OF THE INVENTION

### PROBLEMS TO BE SOLVED BY THE INVENTION

Conventional communication terminals are disadvantageous in that the user of each communication terminal cannot readily confirm whether communication with the other party is continuing properly or not. In the event of voice conversation, the user of each communication terminal can carry out communication smoothly with the other party by giving an affirmative voice response. However, in the event of chat communication, it is difficult for the user of each communication terminal to confirm whether communication with the other party is continuing properly or not.

The present invention is directed to solving such a problem, and an object of the present invention is to provide a communication terminal device allowing the user to readily identify the current status. Another object is to provide a communication terminal device to promote smoother communication between the users.

### MEANS FOR SOLVING THE PROBLEM

According to an aspect of the present invention, there is provided a communication terminal device transmitting and receiving image information of one's own terminal to and from another terminal. The communication terminal includes a display for displaying image information, a communication device for transmitting and receiving information to and from another terminal via a network, an input device for entering command information and image information, and a processor configured to perform a first control for causing, during display of a first image, the display to show a second image based on input of first command information from the input device and transmitting first information to another terminal via the communication device, and in response to receiving first information from the other terminal via the communication device, causes the display to show the second image, and perform a second control for causing, during display of the second image, the display to show the first image based on input of second command information from the input device, and transmitting the second information to the other terminal via the communication device, and in response to receiving second information from the other terminal via the communication device, causes the display to show the first image.

According to another aspect of the present invention, there is provided a communication terminal device transmitting and receiving image information of one's own terminal to and from another terminal. The communication terminal includes a display for displaying image information, a communication device for transmitting and receiving information to and from another terminal via a network, an input device for entering command information and image information, and a processor configured to perform a first control for causing, during display of a first image, the display to show a second image based on input of first command information from the input device and transmitting first information to another terminal via the communication device, and perform a second control for causing, during display of the second image, the display to show the first image based on input of second command information from the input device and transmitting the second information to the other terminal via the communication device.

Preferably, as the first control, the processor transmits the first information to the other terminal via the communication device, based on an instruction to transmit image information to the other terminal as the first command information input via the input device, and causes the display to show information indicating that the right to input an image to be transmitted is at its own terminal, as the second image. As the second control, the processor transmits the second information to the other terminal via the communication device based on an instruction to move the right to input an image to be transmitted as second command information input via the input device, and causes the display to show information indicating that the right to input an image to be transmitted is at the other terminal, as the first image.

Preferably, the processor transmits, during display of the first and second images, first handwriting information corresponding to handwriting input from the input device via the communication device to the other terminal, and receives second handwriting information from the other terminal via the communication device, and during display of the first and second images, causes the display to show first and second handwriting images based on the first and second handwriting information, respectively, during display of the first and second images.

Preferably, the processor determines whether duration of the first image being displayed has come to a first predetermined time, and causes the display to show a third image when the duration of the first image being displayed has come to the first predetermined time.

Preferably, the processor causes the display to show a countdown of a difference between the first predetermined time and the duration of the first image being displayed.

Preferably, the processor determines, during display of the first image, whether duration of a command not being input to the input device has come to a second predetermined time, and causes the display to show a fourth image when the duration of a command not being input to the input device has come to the second predetermined time.

Preferably, the processor causes the display to show a countdown of a difference between the second predetermined time and the duration of a command not being input to the input device.

According to another aspect of the present invention, there is provided a communication terminal device transmitting and receiving image information of one's own terminal to and from another terminal. The communication terminal device includes a display for displaying image information, a communication device for transmitting and receiving information with the other terminal via a network, and a processor configured to perform a first control for causing, during display of a first image, and in response to receiving first information from the other terminal via the communication device, the display to show the second image, and perform a second control for causing, during display of the second image, and in response to receiving second information from the other terminal via the communication device, the display to show the first image.

According to another aspect of the present invention, there is provided a communication terminal device transmitting and receiving image information of one's own terminal to and from another terminal. The communication terminal device includes a display for displaying image information, a communication device for transmitting and receiving information to and from the other terminal via a network, an input device for entering command information and image information, and a processor configured to perform a first control for transmitting, by accepting an operation on a first image and selection of a connection terminal via the input device, during display of the first image, the first information to the connection terminal via the communication device, and causing the display to show a second image and perform a second control for transmitting, by accepting operation on the second image via the input device, during display of the second image, the second information to the connection terminal via the communication device, and causing the display to show the first image.

According to still another aspect of the present invention, there is provided a communication method for a communication terminal device including a display, a communication device, an input device, and a processor. The communication method includes the steps of: causing, during display of a first image, the display to show a second image based on input of first command information from the input device and transmitting first information to another terminal via the communication device, by the processor; in response to receiving first information from the other terminal via the communication device, causing the display to show the second image, by the processor; causing the display to show the first image based on input of second command information from the input device during display of the second image, and transmitting the second information to the other terminal via the communication device, by the processor; and in response to receiving second information from the other terminal via the communication device, causing the display to show the first image, by the processor.

According to another aspect of the present invention, there is provided a communication program for causing communication by a communication terminal device including a display, a communication device, an input device, and a processor. The communication program causes the processor to execute the steps of: causing, during display of a first image, the display to show a second image based on input of first command information from the input device and transmitting first information to another terminal via the communication device; in response to receiving first information from the other terminal via the communication device, causing the display to show the second image; causing the display to show the first image based on input of second command information from the input device during display of the second image, and transmitting the second information to the other terminal via the communication device; and in response to receiving second information from the other terminal via the communication device, causing the display to show the first image.

### EFFECTS OF THE INVENTION

The present invention provides a communication terminal device that allows a user to readily identify the current status. Moreover, there is provided a communication terminal device allowing the user to carry out smooth communication with a companion user.

### BRIEF DESCRIPTION OF THE DRAWINGS

Fig. 1 is a schematic diagram showing an example of a network system according to the present embodiment.
Fig. 2 is a sequence diagram showing an overview of an operation at the network system.
Fig. 3 is a first illustration of the transition of the display states of the first and second mobile phones in accordance with the operation overview of the present embodiment.
Fig. 4 is a second illustration of the transition of the display states of the first and second mobile phones in accordance with the operation overview of the present embodiment.
Fig. 5 is an illustration of an appearance of a mobile phone according to the present embodiment.
Fig. 6 is a block diagram representing the hardware configuration of a mobile phone according to the present embodiment.
Fig. 7 is an illustration of several types of variables.
Fig. 8 is an illustration of a format of an underlying file.
Fig. 9 is an illustration of frame images.
Fig. 10 is a block diagram of a function configuration of a mobile phone (communication terminal) according to the present embodiment.
Fig. 11 is a flowchart of a procedure of a main process in P2P communication at a mobile phone according to the present embodiment.
Fig. 12 is a flowchart of a procedure of a first input mode process at the mobile phone according to the present embodiment.
Fig. 13 is a flowchart of a procedure of a first waiting mode process at the mobile phone according to the present embodiment.
Fig. 14 is a flowchart of a procedure of a second input mode process and second waiting mode process at the mobile phone according to the present embodiment.
Fig. 15 is a flowchart of a procedure of a 0.1-sec.timer-interruption process at the mobile phone according to the present embodiment.
Fig. 16 is a first illustration of the transition of the display states of first and second mobile phones during P2P communication in a first application example of the network system according to the present embodiment.
Fig. 17 is a second illustration of the transition of the display states of first and second mobile phones during P2P communication in the first application example of the network system according to the present embodiment.
Fig. 18 is a third illustration of the transition of the display states of first and second mobile phones during P2P communication in the first application example of the network system according to the present embodiment.
Fig. 19 is a flowchart of a procedure of a chat starting process and ending process according to a second application example.
Fig. 20 is an illustration of the transition of the display states of first and second mobile phones at the time of starting a chat in the network system of the present application example.
Fig. 21 is an illustration of the transition of the display states of first and second mobile phones at the time of ending a chat in the network system of the present application example.

### MODES FOR CARRYING OUT THE INVENTION

Hereinafter reference will be made to the drawings to describe embodiments of the present invention. In the following description, identical components are denoted by identical reference characters. Their names and functions are also identical. Accordingly, they will not be described repeatedly in detail.

Furthermore, hereinafter, a mobile phone 100 will be referred to as a representative example of a "communication terminal". However, the communication terminal may be a personal computer, a car navigation device (a satellite navigation system), a personal navigation device (PND), a personal data assistance (PDA), or other similar information communication devices.

### <General Configuration of Network System 1>

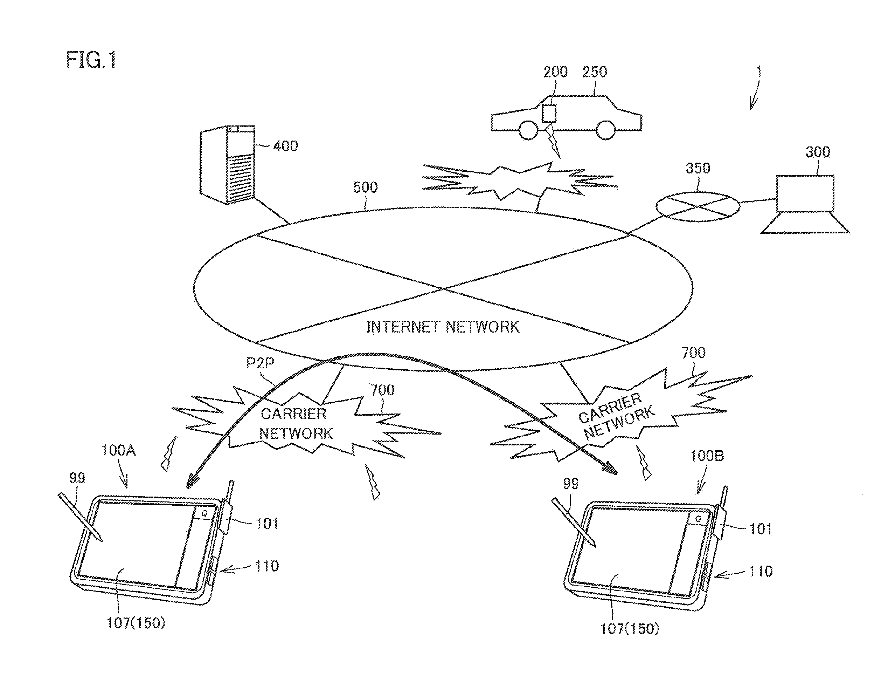

Initially, a network system 1 in a first embodiment will be described. Fig. 1 is a schematic diagram showing one example of network system 1 according to the present embodiment. As shown in Fig. 1, network system 1 includes mobile phones 100A and 100B , a matching server 400, an Internet network (a first network) 500, and a carrier network (a second network) 700. Furthermore, network system 1 according to the present embodiment includes a car navigation device 200 mounted on a vehicle 250, and a personal computer (PC) 300.

For the sake of simplification, network system 1 according to the present embodiment will be described hereinafter corresponding to the case including a first mobile phone 100A and a second mobile phone 100B. Furthermore, in describing a configuration, a function or the like common to each of mobile phones 100A and 100B, the mobile phones will be generically referred to as mobile phone 100. Furthermore, in describing a configuration, a function or the like common to each of mobile phones 100A and 100B, car navigation device 200, and personal computer 300, they will also be generically referred to as a communication terminal.

Mobile phone 100 is configured to be connectable to carrier network 700. Car navigation device 200 is configured to be connectable to Internet network 500. Personal computer 300 is configured to be connectable through a local area network (LAN) 350, a wide area network (WAN) or the like to Internet network 500. Matching server 400 is configured to be connectable to Internet network 500.

More specifically, first mobile phone 100A, second mobile phone 100B, car navigation device 200, and personal computer 300 are interconnectable via carrier network 700 and/or Internet network 500 and capable of mutually transmitting and receiving data. Furthermore, mobile phone 100, car navigation device 200, and personal computer 300 are assigned identification information for identifying their own terminals (for example, a mail address, an Internet protocol (IP) address or the like). In other words, mobile phone 100, car navigation device 200, and personal computer 300 can store identification information of other communication terminals in its internal storage medium and communicate data, based on that identification information, with another communication terminal via carrier network 700, Internet network 500 and/or the like.

Note that mobile phone 100, car navigation device 200, and personal computer 300 according to the present embodiment use their IP addresses assigned to each communication terminal to communicate data with another communication terminal without the intervention of a mail server not shown. It is assumed that, when each communication terminal accesses matching server 400, i.e. when the communication terminal accesses the Internet, the communication terminal is assigned an IP address by matching server 400 or another server device (not shown). The details of the assigning process of an IP address are well known, and accordingly, description thereof will not be provided here.

Particularly, mobile phone 100, car navigation device 200, and personal computer 300 according to the present embodiment can use their assigned IP addresses to communicate data on a network directly and mutually. That is, network system 1 according to the present embodiment includes mobile phone 100, car navigation device 200, and personal computer 300 capable of configuring the so-called pear-to-pear (P2P) type network.

### <Overview of Operation of Network System 1>

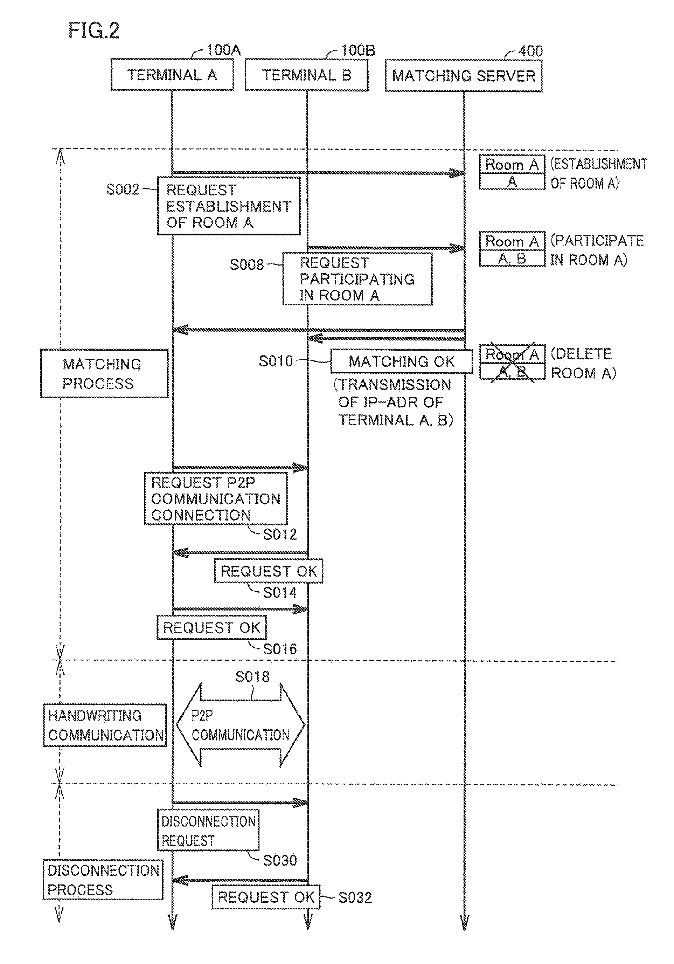

An overview of the operation of network system 1 according to the present embodiment will be described hereinafter. Fig. 2 is a sequence diagram showing an overview of an operation in network system 1. As shown in Figs. 1 and 2, each of the communication terminals according to the present embodiment first needs to exchange (or obtain) an IP address with each other in order to perform P2P type data communication. Upon obtaining an IP address, each communication terminal transmits to the other communication terminal a message, an attached file, and/or the like through the P2P type data transmission and reception.

The description set forth below corresponds to the case where each communication terminal transmits/receives a message and IP address via a chat room generated by matching server 400, followed by performing P2P communication based on each other's IP address.

Initially, first mobile phone 100A (terminal A in Fig. 2) requests IP registration (log in) from matching server 400 (step S002). First mobile phone 100A may obtain the IP address at the same time, or obtain the IP address from another server device in advance. Specifically, first mobile phone 100A transmits to matching server 400 via carrier network 700 and/or Internet network 500 the mail address and IP address of the first mobile phone 100A, the mail address of second mobile phone 100B (terminal B in Fig. 2), and a message requesting generation of a new chat room.

Matching server 400 responds to the request to store the mail address of first mobile phone 100A in correspondence with that IP address. Matching server 400 creates a room name based on the mail address of first mobile phone 100A and the mail address of second mobile phone 100B, or extracts a room name included in the message to generate a chat room of the relevant room name. At that stage, matching server 400 may notify first mobile phone 100A that generation of the chat room has been completed. Matching server 400 stores the room name and the IP addresses of the current participant communication terminals in correspondence therebetween.

The user of first mobile phone 100A notifies the user of second mobile phone 100B that a new chat room has been generated, i.e. invites the user of second mobile phone 100B to the chat room. For example, first mobile phone 100A transmits P2P participation request mail to second mobile phone 100B via carrier network 700 and/or Internet network 500.

Upon receiving the P2P participation request mail, second mobile phone 100B generates a room name based on the mail address of first mobile phone 100A and the mail address of second mobile phone 100B, or obtains a room name from the participation request mail, and then transmits to matching server 400 the mail address and IP address of second mobile phone 100B, and a message indicating participation in the chat room of that room name (step S008). Second mobile phone 100B may at the same time obtain the IP address, or first obtain the IP address before accessing matching server 400. Matching server 400 may delete the chat room at this stage.

Matching server 400 accepts the message and stores the mail address of second mobile phone 100A in association with the IP address. Matching server 400 transmits to first mobile phone 100A an indication of second mobile phone 100B participating in the chat room and the IP address of second mobile phone 100B (step S010). At the same time, matching server 400 transmits to second mobile phone 100B an indication of accepting participation in the chat room and the IP address of first mobile phone 100A.

First mobile phone 100A transmits a P2P connection request message (start message) to second mobile phone 100B based on the IP address of second mobile phone 100B (step S012). Second mobile phone 100B receives the connection request message and transmits to first mobile phone 100A a first connection consent message (response message) based on the IP address of first mobile phone 100A (step S014). First mobile phone 100A receives the first connection consent message from second mobile phone 100B, and transmits a second connection consent message to second mobile phone 100B (step S016).

Thus, first mobile phone 100A and second mobile phone 100B authenticate each other. Upon completing authentication, first mobile phone 100A and second mobile phone 100B start P2P communication (step S018).

When first mobile phone 100A transmits to second mobile phone 100B a disconnection request message indicating disconnection of the P2P communication (step S030), second mobile phone 100B transmits a disconnection consent message indicating acceptance of the disconnection request to first mobile phone 100A (step S032).

### <Operation Overview of P2P Communication>

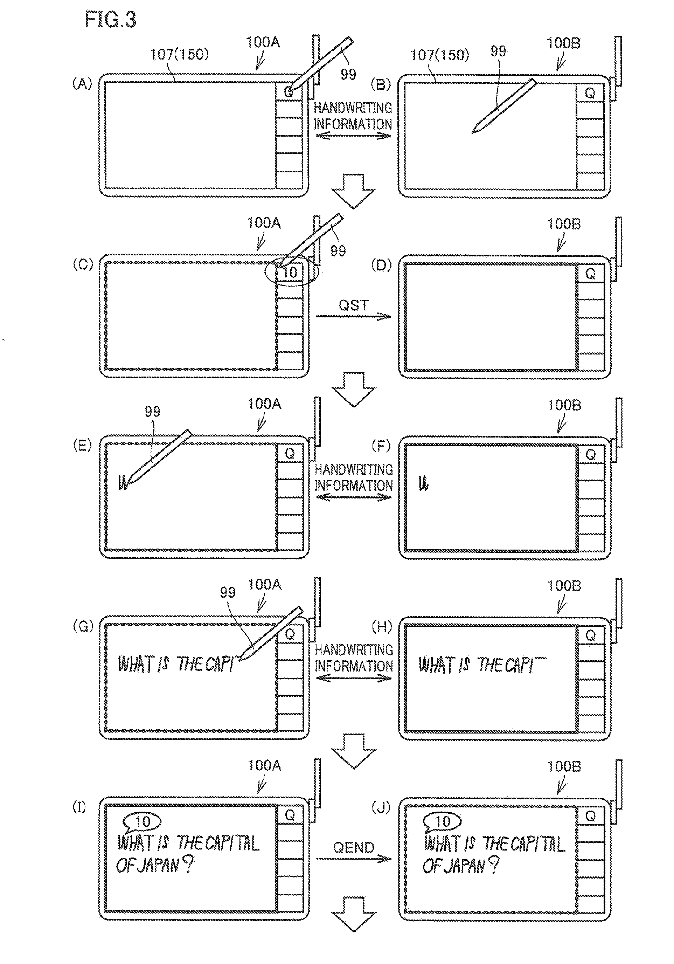

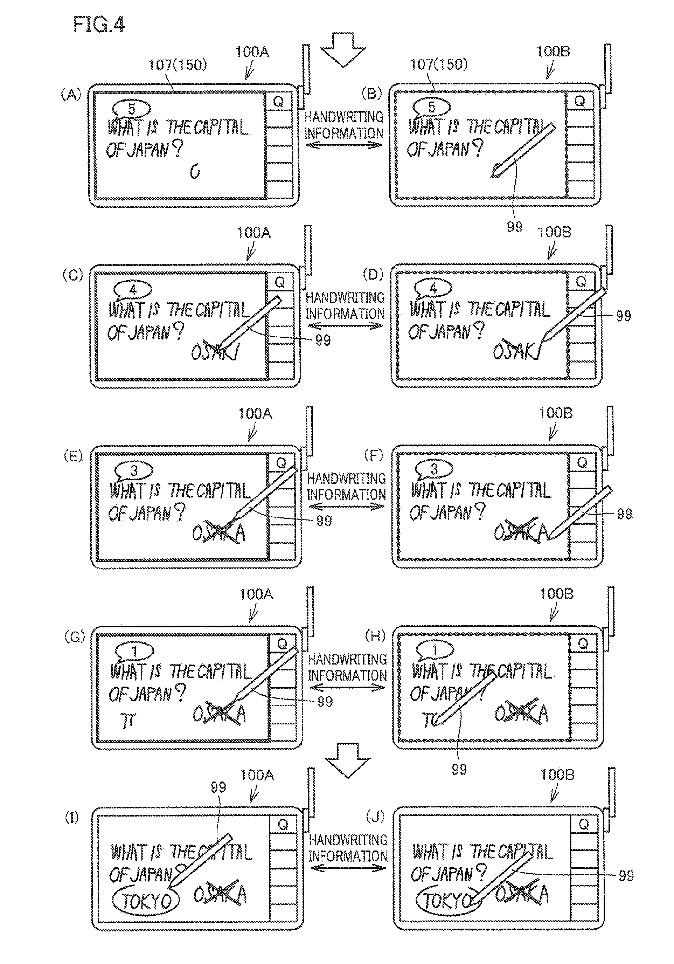

An operation overview of P2P communication at network system 1 according to the present embodiment will be described hereinafter. Figs. 3 and 4 are illustrations of the transition of the display states of first and second mobile phones 100A and 100b in accordance with the P2P communication operation overview of the present embodiment. The transition of the display states of first mobile phone 100A and second mobile phone 100B will be described hereinafter with reference to Figs. 3 and 4.

Specifically, Fig. 3 (A) is a first illustration of the display state of first mobile phone 100A during normal P2P communication. Fig. 3 (B) is a first illustration of the display state of second mobile phone 100B during normal P2P communication.

Fig. 3 (C) is a first illustration of the display state of first mobile phone 100A during a first input mode. Fig. 3 (D) is a first illustration of the display state of second mobile phone 100B during a first waiting mode. Fig. 3(E) is a second illustration of the display state of first mobile phone 100A during a first input mode. Fig. 3 (F) is a second illustration of the display state of second mobile phone 100B during a first waiting mode. Fig. 3 (G) is a third illustration of the display state of first mobile phone 100A during a first input mode. Fig. 3 (H) is a third illustration of the display state of second mobile phone 100B during a first waiting mode.

Fig. 3 (I) is a first illustration of the display state of first mobile phone 100A during a second waiting mode. Fig. 3(J) is a first illustration of the display state of second mobile phone 100B during a second input mode.

Fig. 4 (A) is a second illustration of the display state of first mobile phone 100A during a second waiting mode. Fig. 4 (B) is a second illustration of the display state of second mobile phone 100B during a second input mode. Fig. 4 (C) is a third illustration of the display state of first mobile phone 100A during a second waiting mode. Fig. 4 (D) is a third illustration of the display state of second mobile phone 100B during a second input mode. Fig. 4 (E) is a fourth illustration of the display state of first mobile phone 100A during a second waiting mode. Fig. 4 (F) is a fourth illustration of the display state of second mobile phone 100B during a second input mode. Fig. 4 (G) is a fifth illustration of the display state of first mobile phone 100A during a second waiting mode. Fig. 4 (H) is a fifth illustration of the display state of second mobile phone 100B during a second input mode.

Fig. 4 (I) is a second illustration of the display state of first mobile phone 100A during normal P2P communication. Fig. 4 (J) is a second illustration of the display state of second mobile phone 100B during normal P2P communication.

As shown in Figs. 3 (A) and (B), first mobile phone 100A and second mobile phone 100B show a display of a normal chat screen in a normal P2P mode. When the user of first mobile phone 100A depresses the question button at display 107 under this state, first mobile phone 100A moves to the first input mode (Q_MODE) shown in Fig. 3(C).

Referring to Fig. 3 (C), first mobile phone 100A modifies the chat frame at display 107 to a first image in the first input mode. The first image may be a frame image of a color (for example, red) differing from the color of the frame in a normal P2P mode, or may be an icon or message causing the user to be aware that "she/he is the one in the state to input handwriting". In the transition to the first input mode, first mobile phone 100A transmits to second mobile phone 100B a message notifying transition to the first input mode (QST command). In the first input mode set forth below, first mobile phone 100A causes display 107 to show at a predetermined position an image of a countdown of the remaining time of a first predetermined time, until handwriting input is started.

Second mobile phone 100B responds to reception of a QST command to enter a first waiting mode (A_MODE). As shown in Fig. 3(D), in the first waiting mode, second mobile phone 100B has the chat frame of display 107 modified to a second image. The second image may be a frame image of a color (for example, blue) differing from the color of the frame in a normal P2P mode, or may be an icon or message causing the user to be aware that "the other party is the one in the state to input handwriting" .

Then, as shown in Fig. 3 (E)-(H), each of first mobile phone 100A and second mobile phone 100B sequentially displays a handwriting image corresponding to the handwriting input accepted by first mobile phone 100A, and the handwriting image corresponding to the handwriting input accepted by second mobile phone 100B. In the case where first mobile phone 100A in the first input mode does not accept handwriting input for a predetermined period of time, i.e. at an elapse of a predetermined time starting from the pick up of a stylus pen 99 from a tablet 119, first mobile phone 100A moves to a second waiting mode (A_MODE 2), as shown in Fig. 3(I).

When mobile phone 100 of the present embodiment does not accept handwriting input for a predetermined time during the first input mode, mobile phone 100 enters a second waiting mode. Alternatively, mobile phone 100 may enter the second waiting mode when in the first input mode in response to depression of a predetermined button or a software keyboard.

As shown in Fig. 3 (I) in the second waiting mode, first mobile phone 100A modifies the chat frame at display 107 to a third image. The third image may be a frame image of a color (for example, yellow) differing from the color of the frame in a normal P2P mode, or an icon or message causing the user to be aware that "the other party is the one in the state to input handwriting". The third image may be the same as the second image.

In the transition to the second waiting mode, first mobile phone 100A transmits to second mobile phone 100B a message notifying that the first input mode has ended, i.e. transition to the second waiting mode (QEND command). In the second waiting mode set forth below, first mobile phone 100A causes display 107 to show an image of a countdown of the remaining time of a second predetermined time.

Second mobile phone 100B moves to a second input mode (Q_MODE) upon receiving a QEND command. As shown in Fig. 3 (J) in the second input mode, second mobile phone 100B modifies the chat frame of display 107 to a fourth image. The fourth image may be a frame image of a color (for example, green) differing from the color of the frame in a normal P2P mode, or an icon or message causing the user to be aware that "she/he is the one in the state to input handwriting". The fourth image may be the same as the first image.

Then, as shown in Fig. 4 (A)-(H), each of first mobile phone 100A and second mobile phone 100B sequentially displays a handwriting image corresponding to the handwriting input accepted by first mobile phone 100A, and a handwriting image corresponding to the handwriting input accepted by second mobile phone 100B. During this stage, second mobile phone 100B displays an image for the countdown of the remaining time of second predetermined time at display 107.

When the second predetermined time elapses, first mobile phone 100A and second mobile phone 100B enter a normal P2P mode, as shown in Fig. 4 (I) and (J). Namely, first mobile phone 100A and second mobile phone 100B reset display 107 to the chat frame for a normal P2P mode.

Thus, the communication terminal of the present embodiment allows the user to carry out communication smoothly with the other party. In other words, the user of the communication terminal can readily identify who has the right in the chat since the user of the communication terminal can readily become aware whether ""she/he is the one in the state to input handwriting" or " the other party is the one in the state to input handwriting". A configuration of such a function will be described hereinafter.

### <Hardware Configuration of Mobile Phone 100>

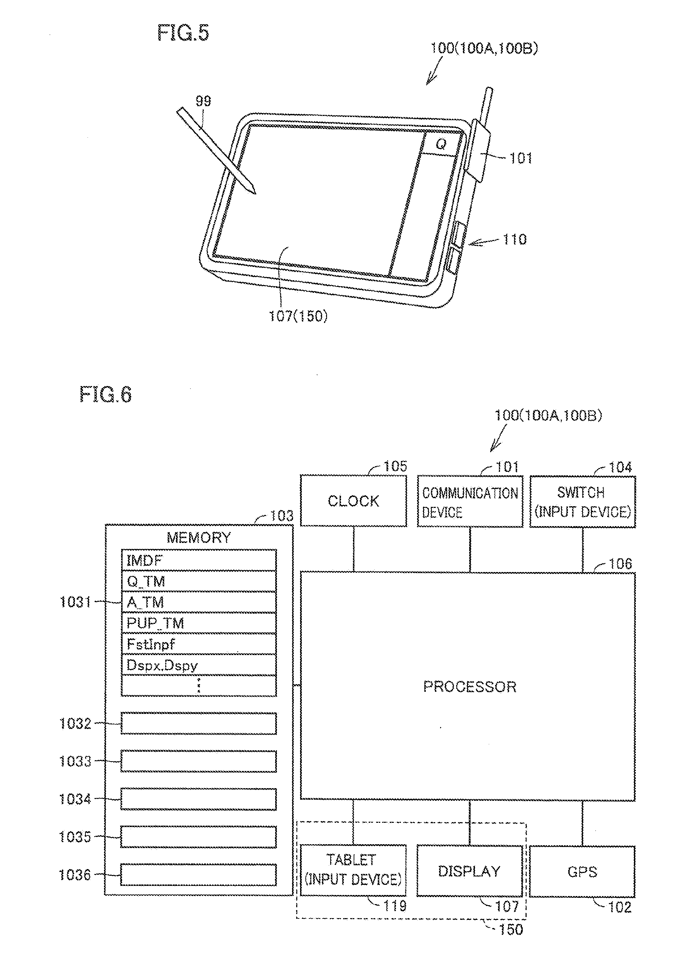

A hardware configuration of mobile phone 100 of the present embodiment will be described hereinafter. Fig. 5 is an illustration of an appearance of mobile phone 100 of the present embodiment. Fig. 6 is a block diagram of a hardware configuration of mobile phone 100 of the present embodiment.

Referring to Figs. 5 and 6, mobile phone 100 of the present embodiment includes a communication device 101 for transmitting and receiving data with an external network, a GPS 102 obtaining the current positional information of its own terminal, a memory 103 storing a program and various databases, a switch 104 accepting input of various information, a clock 105 counting time (period of time), a processor (control unit) 106, a display 107, and a tablet 119.

Communication device 101 converts communication data from processor 106 into communication signals, which are dispatched via an antenna not shown. Communication device 101 converts communication signals received via an antenna into communication data, which is input to processor 106.

GPS 102 generates current position information indicating the current location of mobile phone 100, based on positioning electric waves received from a satellite or the like via a positioning antenna not shown, and applies the current position information to processor 106.

Switch 104 accepts information from a user by a key input operation or the like. For example, switch 104 includes a ten-key, a decision key, or the like to accept a selection command of the address of the other party, mail text, and the like. Switch 104 and tablet 119 that will be described afterwards may also be generically referred to as "input device".

Processor 106 is implemented by a central processing unit (CPU), a micro processing unit (MPU), or the like to control each element of mobile phone 100. For example, processor 106 receives various commands from the user via an input device such as switch 104 or tablet 119 to transmit/receive data to/from an external communication terminal via a communication device 101 and/or a network. Processor 106 reads out a control program from memory 103 to execute a relevant control program.

Display 107 according to the present embodiment is formed of organic electroluminescence (EL), a liquid crystal panel, or a cathode ray tube (CRT). At mobile phone 100 of the present embodiment, tablet 119 is arranged at the top side (surface side) of display 107. Accordingly, the user can use stylus pen 99, a finger, or the like, for example, to apply handwriting input of graphical information and the like to processor 106 via tablet 119. In other words, display 107 and tablet 119 of the present embodiment constitute the so-called touch panel.

Display 107 and tablet 119 may be implemented by a touch panel of various types, or an optical sensor liquid crystal.

Memory 103 is implemented by, for example, a volatile static-random access memory (S-RAM) or video random access memory (V-RAM) serving as a working memory, a non-volatile read only memory (ROM) storing a control program or the like, a non-volatile random access memory (NV-RAM), a non-volatile hard disk drive (HDD) storing still image data, motion image data, and the like. As will be described afterwards, memory 103 stores several types of variables 1031, an underlying file 1032, a normal P2P mode frame image 1033, a frame image 1034 for a first input mode, a frame image 1035 for a second input mode, an image 1036 eventually displayed at display 107, and the like.

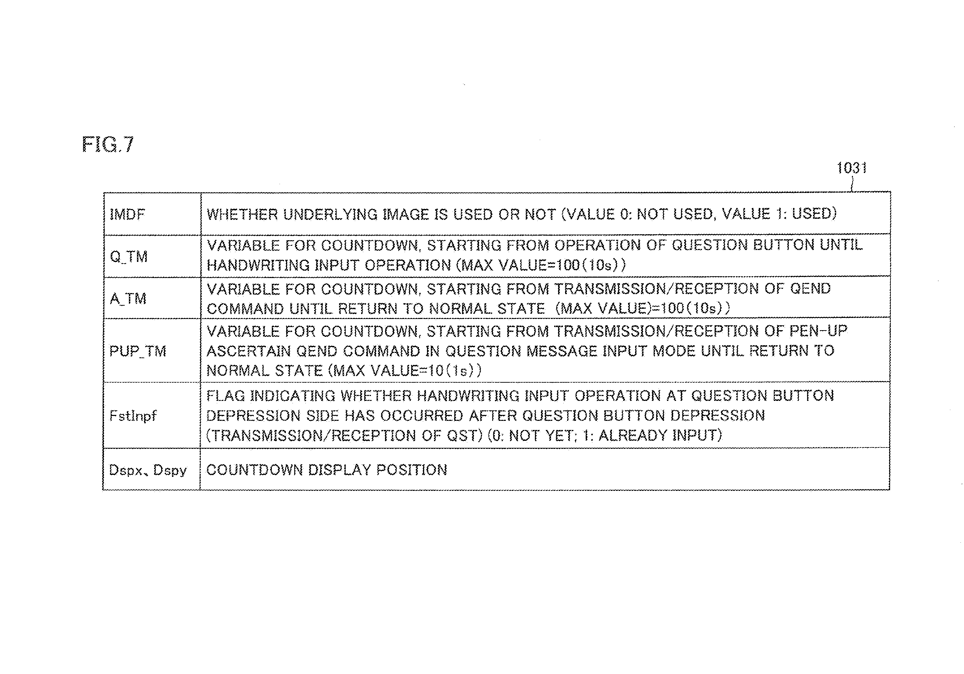

Fig. 7 is an illustration of several types of variables 1031. As shown in Fig. 7, a volatile S-RAM serving as a working memory (hereinafter, also referred to as "work memory") of memory 103 stores variables 1031. IMDF is a variable indicating whether an underlying image is to be used or not. Q_TM is a variable indicating the remaining time of a first predetermined time that is the time starting from a depression of the question button until the user begins to input information. Q_TM stores, for example, a value from 0 to 100, with the value of 1 corresponding to 0.1 second. A_TM is a variable representing the remaining time of a second predetermined time that is the duration starting from transmission (or reception) of a QEND command until returning to a normal P2P mode. For example, A_TM stores a value from 0 to 100 with the value of 1 as 0.1 second. PUP_TM is a variable indicating the remaining time of a third predetermined time that is the duration starting from a pick up of the pen during the first input mode until transition to the second waiting mode. For example, PUP_TM stores a value from 0 to 100 with the value of 1 as 0.1 second. FstInpf is a variable indicating whether handwriting has been input after depression of the question button. Dspx is the X coordinate of the display position where a countdown display is provided. Dspy is the Y coordinate of the display position where a countdown display is provided.

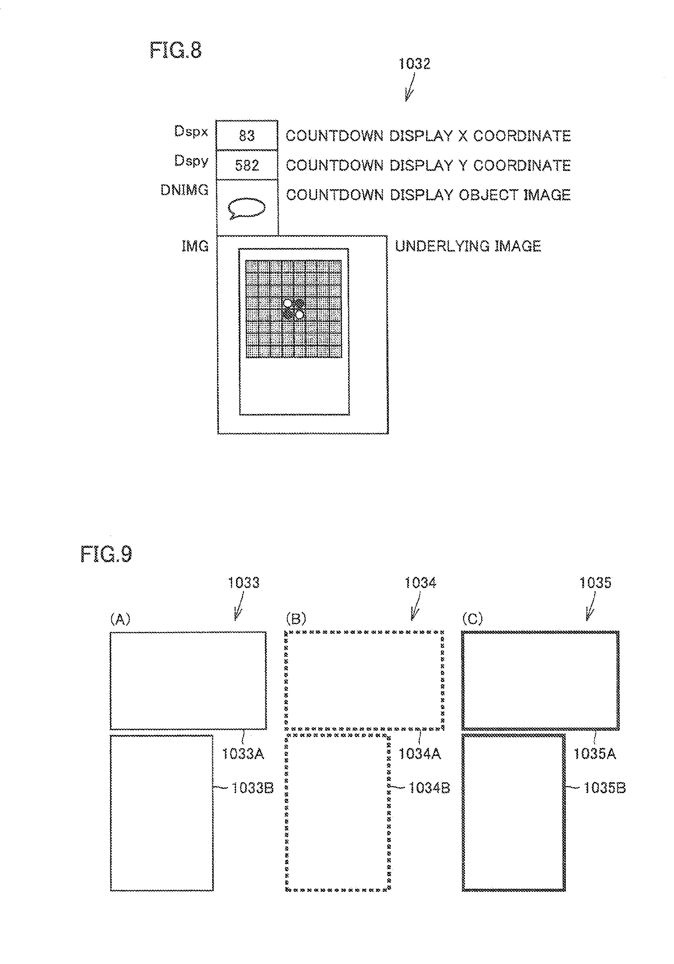

Fig. 8 is an illustration of the format of underlying file 1032. As shown in Fig. 8, HDD, for example, of memory 103, stores underlying file 1032. Processor 106 reads out underlying file 1032 from the HDD into the work memory, and causes display 107 to show an image based on underlying file 1032. Underlying file 1032 includes countdown display X coordinate Dspx, countdown display Y coordinate Dspy, a balloon image DNIMG for countdown display, and an underlying image IMG.

For example, underlying image picture IMG constituting underlying file 1032 includes a grid board image used in Othello games, character images of cartoons and the like, as shown in the application example that will be described afterwards.

Fig. 9 is an illustration of frame images 1033, 1034 and 1035. Specifically, Fig. 9 (A) shows a frame image 1033 of a normal P2P mode. Fig. 9 (B) shows a frame image 1034 in the first and second input modes. Fig. 9 (C) shows a frame image 1035 in first and second waiting modes. As shown in Fig. 9, the HDD implementing memory 103 stores normal P2P mode frame image 1033, first and second input mode frame image 1034, and first and second waiting mode frame image 1035. Processor 106 reads out frame images 1033, 1034 and 1035 from the HDD into the work memory to cause display 107 to show an image according to frame images 1033, 1034 and 1035.

In the present embodiment, frame image 1034 of the first and second input modes (first and fourth images) takes a color (for example, red) differing from the color of normal P2P mode frame image 1033 (fifth image). However, the frame images are not limited to having different colors for the frame lines. The only requirement is a difference between the display contents of first and second input modes and the display contents of a normal P2P mode.

Furthermore, frame image 1035 of the first and second waiting modes (second and fourth images) in the present embodiment takes a color (for example, blue) differing from the color of normal P2P mode frame image 1033 (fifth image) and from the color of first and second input modes (first and third images). However, the frame images are not limited to having different colors for the frame lines. The only requirement is a difference of the display contents of first and second waiting modes from the display contents of a normal P2P mode and from the display contents of first and second input modes.

Specifically, a normal P2P mode frame image 1033 includes a frame image 1033A corresponding to a landscape type display, and a frame image 1033B corresponding to a portrait type display. First and second input mode frame image 1034 includes a frame image 1034A corresponding to a landscape type display and a frame image 1034B corresponding to a portrait type display. Frame image 1035 of first and second waiting modes includes a frame image 1035A corresponding to a landscape type display, and a frame image 1035B corresponding to a portrait type display.

### <Functional Configuration of Mobile Phone 100>

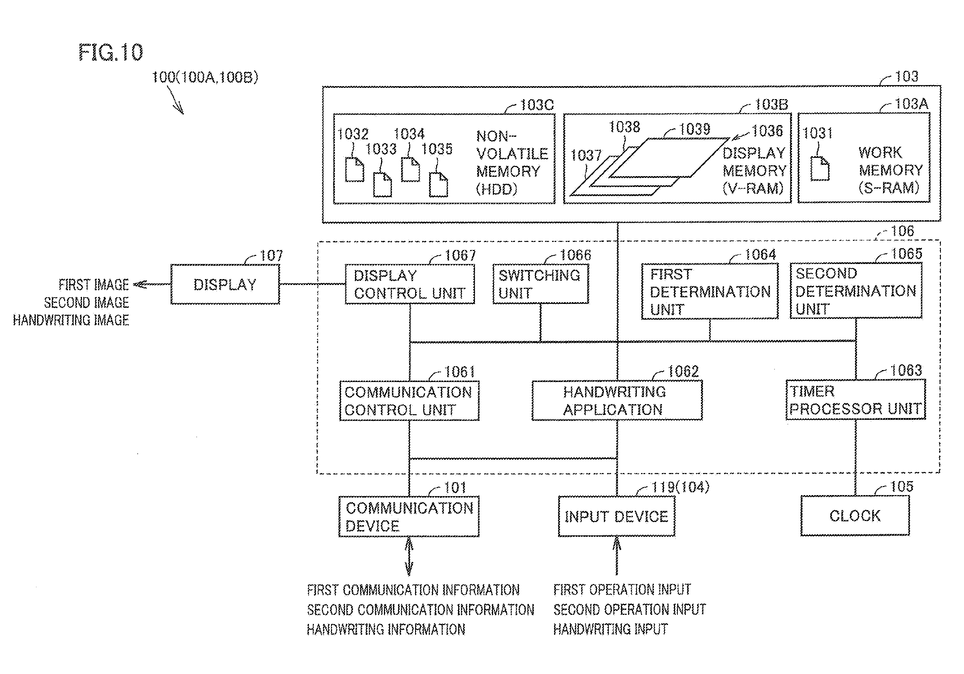

Fig. 10 is a block diagram of a function configuration of mobile phone 100 (communication terminal) according to the present embodiment. Referring to Fig. 10, mobile phone 100 of the present embodiment includes a communication control unit 1061, a handwriting application 1062, a timer processing unit 1063, a second determination unit 1065, a first determination unit 1064, a switching unit 1066, and a display control unit 1067. Further, mobile phone 100 includes a communication device 101, a clock 105, a display 107, a tablet 119, and a memory 103, as shown in Fig. 6.

As mentioned before, tablet 119 receives handwriting input from the user, software key input, or the like to store input information corresponding to an input operation in memory 103. Tablet 119 and switch 104 implement an input device accepting various inputs from the user. For example, tablet 119 accepts the track of the user forming contact with the touch panel as handwriting input, and delivers handwriting information corresponding to the handwriting input to processor 106. Processor 106 stores the handwriting information in memory 103.

Display 107 provides the display of an image and/or text based on data from processor 106. Specifically, display 107 shows in an overlapping manner a handwritten image corresponding to the handwriting input accepted at its own tablet 119 and a handwriting image corresponding to the handwriting information received at communication device 101, based on the data from processor 106.

Communication device 101 is implemented by a communication antenna and/or signal processing unit not shown. Communication device 101 transmits to another communication terminal the handwriting information corresponding to the handwriting input accepted at tablet 119, and receives handwriting information from the other communication terminal. Communication device 101 delivers the received handwriting information to processor 106. Processor 106 stores the received handwriting information in memory 103.

Memory 103 includes, for example, a work memory (S-RAM or the like) 103A for storing temporarily (in a volatile manner) several types of variables 1031, a display memory (VRAM or the like) 103B for storing an image or the like to be displayed at display 107, and a non-volatile memory (HDD or the like) 103C storing underlying file 1032, frame images 1033, 1034, 1035, and the like. Image 1036 displayed at display 107 includes a frame plane 1037 indicating the selected frame image, an underlying plane 1038 indicating the selected underlying image, and a handwriting plane 1039 indicating the input handwriting image.

Communication control unit 1061, handwriting application 1062, timer processing unit 1063, second determination unit 1065, first determination unit 1064, switching unit 1066, and display control unit 1067 are implemented by processor 106 or the like. Specifically, each of the functions of processor 106 is implemented by processor 106 executing a control program stored in memory 103 or the like to control each hardware shown in Fig. 6. For example, processor 106 implements the aforementioned functional blocks by reading out a program prestored in non-volatile memory 103C of memory 103 into work memory 103A of the same memory 103 and executing the program.

Communication control unit 1061 uses communication device 101 to carry out P2P communication with another communication terminal. Specifically, communication control unit 1061 obtains its own IP address and the IP address of the other communication terminal from another server device or the like using communication device 101 to initiate direct transmission/reception of data with the other communication terminal using the relevant IP address.

Communication control unit 1061 receives a QST command (first information) from the other communication terminal via communication device 101. Conversely, when communication control unit 1061 accepts a first command via tablet 119, communication control unit 1061 transmits a QST command (first information) to the other communication terminal via communication device 101. Communication control unit 1061 determines that the first command has been accepted when the question button on tablet 119, for example, is depressed.

Communication control unit 1061 receives a QEND command (second information) from the other communication terminal via communication device 101. When the second command is received via tablet 119, communication control unit 1061 transmits a QEND command (second information) to the other communication terminal via communication device 101. For example, when a predetermined software keyboard is depressed at tablet 119 in the first input mode, or when tablet 119 did not sense contact of stylus pen 99 for at least a third predetermined time, communication control unit 1061 determines that the second command is accepted.

Handwriting application 1062 stores handwriting information corresponding to the handwriting input accepted by tablet 119, and also the handwriting information received by communication device 101, into display memory 103B. Specifically, handwriting application 1062 updates handwriting plane 1039 based on the handwriting information from tablet 119 and communication device 101.

Display control unit 1067 causes display 107 to show a frame image 1034 in a first input mode, and a frame image 1035 in a first waiting mode. Display control unit 1067 causes display 107 to show frame image 1034 and frame image 1035 in a second input mode and a second waiting mode, respectively.

Thus, display control unit 1067 of the present embodiment causes a similar frame image 1034 to be displayed in both the first input mode and second input mode. However, display control unit 1067 may display different frame images between the first input mode and second input mode to allow the user to discriminate the two modes.

Display control unit 1067 of the present embodiment displays a similar frame image 1035 in the first waiting mode and second waiting mode. However, display control unit 1067 may display different frame images between the first input mode and second input mode to allow the user to discriminate the two modes.

Display control unit 1067 causes display 107 to show a frame image 1033 in a normal P2P mode.

During the first input mode, display control unit 1067 causes display 107 to show the countdown of the difference between the first predetermined time and the duration of the first input mode. In other words, display control unit 1067 causes display 107 to show the remaining time of the first predetermined time during the first input mode.

In addition, during the second waiting mode or second input mode, display control unit 1067 causes display 107 to show the countdown of the difference between the second predetermined time and the duration of the second waiting mode or second input mode. In other words, display control unit 1067 causes display 107 to show the countdown of the remaining time of the second predetermined time, or the second waiting or second input mode, during the second waiting mode or second input mode. At this stage, display control unit 1067 displays the remaining time at a position on display 107 where the handwriting image was first drawn.

Timer processing unit 1063 counts a predetermined time by referring to clock 105. For example, timer processing unit 1063 refers to clock 105 to count the time of elapse from the depression of the question button. Specifically, timer processing unit 1063 counts the elapsed time starting from entering the first input mode until handwriting is input at tablet 119.

In addition, timer processing unit 1063 refers to clock 105 to count the elapsed time starting from stylus pen 99 or a finger detached from tablet 119, after being brought into contact with tablet 119 in the first input mode. Furthermore, timer processing unit 1063 refers to clock 105 to count the elapsed time from entering the second waiting mode.

Second determination unit 1065 determines whether the duration of the first input mode has come to the first predetermined time. Specifically, second determination unit 1065 determines whether the duration of the first input mode has come to the first predetermined time without accepting handwriting input at tablet 119.

First determination unit 1064 determines whether the duration of the second waiting mode or second input mode has come to a second predetermined time or not. Specifically, first determination unit 1064 determines whether a third predetermined time has elapsed since completing acceptance of handwriting input at tablet 119, and determines whether the elapsed time since the elapse of the third predetermined time has exceeded the second predetermined time.

Switching unit 1066 switches to the first input mode when accepting the first command (a signal indicating depression of the question button) via tablet 119. Switching unit 1066 determines that the first command has been accepted when, for example, the question button of tablet 119 is depressed. Further, switching unit 1066 switches to the second waiting mode in response to receiving the first information (for example, QST command or the like) via communication device 101.

Switching unit 1066 switches to the second waiting mode in response to accepting the second command via tablet 119. For example, in the first input mode, switching unit 1066 determines that the second command has been accepted when a predetermined software keyboard is depressed at tablet 119, or when tablet 119 does not sense contact of stylus pen 99 for at least the third predetermined time. Switching unit 1066 switches to the second input mode in response to receiving the second information (for example, QEND command) via communication device 101.

Switching unit 1066 switches to the normal P2P mode when second determination unit 1065 determines that the duration of the first input mode has come to the first predetermined time, without accepting handwriting input at tablet 119. Switching unit 1066 switches to the normal P2P mode when first determination unit 1064 determines that the duration of the second waiting mode or second input mode has come to the second predetermined time.

### <Main Process of P2P Communication>

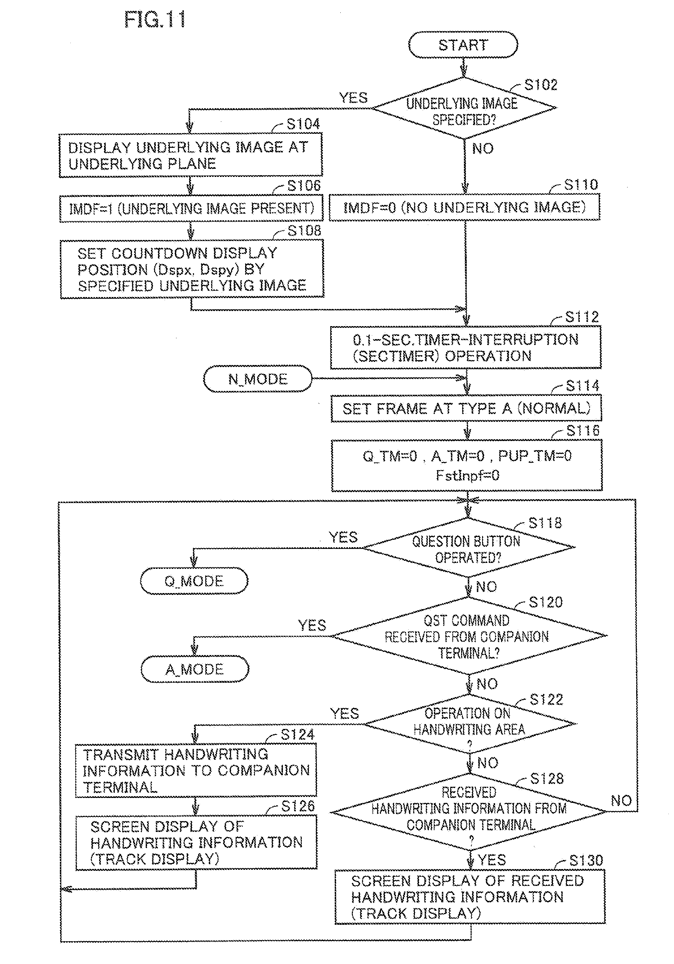

The main process of P2P communication at mobile phone 100 of the present embodiment will be described hereinafter. Fig. 11 is a flowchart of a procedure of a main process in P2P communication at mobile phone 100 according to the present embodiment.

Referring to Fig. 11, processor 106 determines whether an underlying image (background image) is specified or not (step S102). When an underlying image is specified (YES at step S102), processor 106 displays the underlying image at display 107 based on a corresponding underlying file 1032 (Step S104). Processor 106 inserts 1 into IMDF in memory 103 (step S106). Processor 106 specifies the countdown display position (Dspx, Dspy) based on underlying file 1032 (step S108). Then, processor 106 operates the 0.1-sec.timer-interruption (SECTIMER) function (step S112).

When an underlying image is not specified (NO at step S102), processor 106 inserts 0 into IMDF in memory 103 (step S110). Then, in a similar manner, processor 106 operates the 0.1-sec.timer-interruption (SECTIMER) function (step S112).

Then, as shown in Fig. 3 (A), processor 106 displays a normal P2P communication frame image 1033 at display 107 (step S114). Processor 106 inserts 0 into Q_TM, 0 into A_TM, 0 into PUP_TM, and 0 into FstInpf in memory 103 (step S116).

Processor 106 determines whether the question button has been operated by the user via tablet 119 (step S118). When the question button has been operated by the user (YES at step S118), processor 106 moves to the first input mode (Q_MODE). When the question button is not operated by the user (NO at step S118), processor 106 determines whether a QST command has been received from the companion terminal via communication device 101 (step S120). When a QST command has been received from the companion terminal (YES at step S120), processor 106 moves to the first waiting mode (A_MODE).

When a QST command has not been received from the companion terminal (NO at step S120), processor 106 determines whether the user has manipulated the handwriting area of tablet 119 (step S122). Namely, processor 106 determines whether handwriting input has been accepted or not. When handwriting input has been accepted (YES at step S122), processor 106 transmits handwriting information corresponding to the handwriting input to the companion terminal via communication device 101 (step S124). Processor 106 causes display 107 to show a handwritten image based on the handwriting information (step S126). Processor 106 repeats the process from step S118.

When handwriting input has not been accepted (NO at step S 122), processor 106 determines whether handwriting information has been received from the companion terminal via communication device 101 (step S128). When handwriting information has been received from the companion terminal (YES at step S128), processor 106 causes display 107 to show a handwritten image based on the received handwriting information (step S130). Processor 106 repeats the process from step S118.

When handwriting information has not been received from the companion terminal (NO at step S128), processor 106 repeats the process from step S118.

### <First Input Mode>

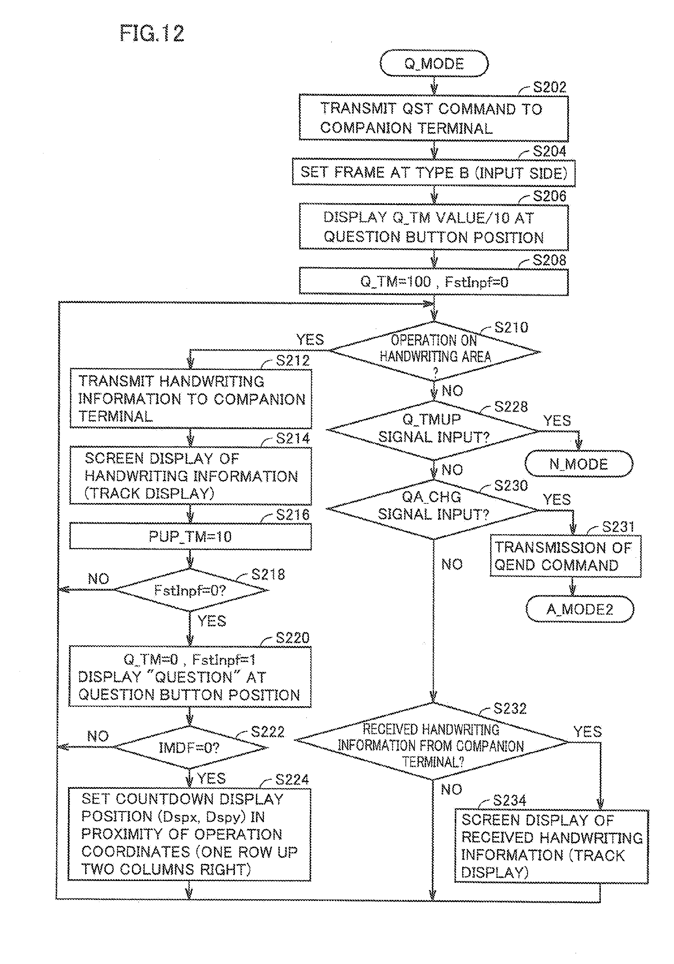

The procedure of a first input mode process at mobile phone 100 of the present embodiment will be described hereinafter. Fig. 12 is a flowchart of a procedure of a first input mode process at mobile phone 100 according to the present embodiment.

Referring to Fig. 12, processor 106 transmits a QST command to the companion terminal via communication device 101 (step S202). As shown in Fig. 3 (C), processor 106 causes display 107 to show frame image 1034 for the first input mode (step S204). Processor 106 shows a number of the value stored in Q_TM in memory 103 divided by 10 at the position where the question button is displayed on display 107 (step S206). Processor 106 inserts 100 into Q_TM in memory 103, and inserts 0 into FstInpf of memory 103 (step S208).

Processor 106 determines whether the user has manipulated the handwriting area on tablet 119 (step S210). Namely, processor 106 determines whether handwriting input has been accepted or not. When handwriting input has been accepted (YES at step S210), processor 106 transmits to the companion terminal the handwriting information corresponding to the handwriting input via communication device 101 (step S212). As shown in Fig. 3 (E) and (G), processor 106 causes display 107 to show a handwritten image based on the handwriting information (step S214).

Processor 106 inserts 10 into PUP_TM in memory 103 (step S216). Processor 106 determines whether 0 is inserted in FstInpf in memory 103 (step S218). When 0 is not inserted in FstInpf (NO at step S218), processor 106 repeats the process from step S210.

When 0 is inserted in FstInpf (YES at step S218), processor 106 inserts 0 into Q_TM and 1 into FstInpf in memory 103. At the same time, processor 106 displays a message "question" at the position where the question button is displayed on display 107 (step S220). Processor 106 determines whether 0 is inserted in IMDF in memory 103 (step S222).

When 0 is not inserted in IMDF in memory 103 (NO at step S222), processor 106 repeats the process from step S210. When 0 is inserted in IMDF in memory 103 (YES at step S222), processor 106 sets the coordinates in the proximity of the position where the handwriting input was accepted as the set countdown display position (Dspx, Dspy) (step S224). For example, processor 106 sets the coordinates that is one row above and two columns right of the handwriting entry start coordinate as countdown display position (Dspx, Dspy). Processor 106 repeats the process from step S210.

When handwriting input is not accepted (NO at step S210), processor 106 determines whether signal Q_TMUP is input or not from the 0.1-sec.timer-interruption (SECTIMER) function (step S228). When signal Q_TMUP is input (YES at step S228), processor 106 moves to a normal P2P mode (N_MODE). When signal Q_TMUP is not input (NO at step S228), processor 106 determines whether signal QA_CHG has been input or not from the 0.1-sec.timer-interruption (SECTIMER) function (step S230).

When signal QA_CHG is input (YES at step S230), processor 106 transmits a QEND command to the companion terminal (step S231), and moves into the second waiting mode (A_MODE 2). When signal QA_CHG is not input (NO at step S230), processor 106 determines whether handwriting information has been received from the companion terminal via communication device 101 (step S232). When handwriting information has been received from the companion terminal (YES at step S232), processor 106 causes display 107 to show a handwritten image based on the received handwriting information (step S234). Processor 106 repeats the process from step S210. When handwriting information was not received from the companion terminal (NO at step S232), processor 106 repeats the process from step S210.

### <First Waiting Mode>

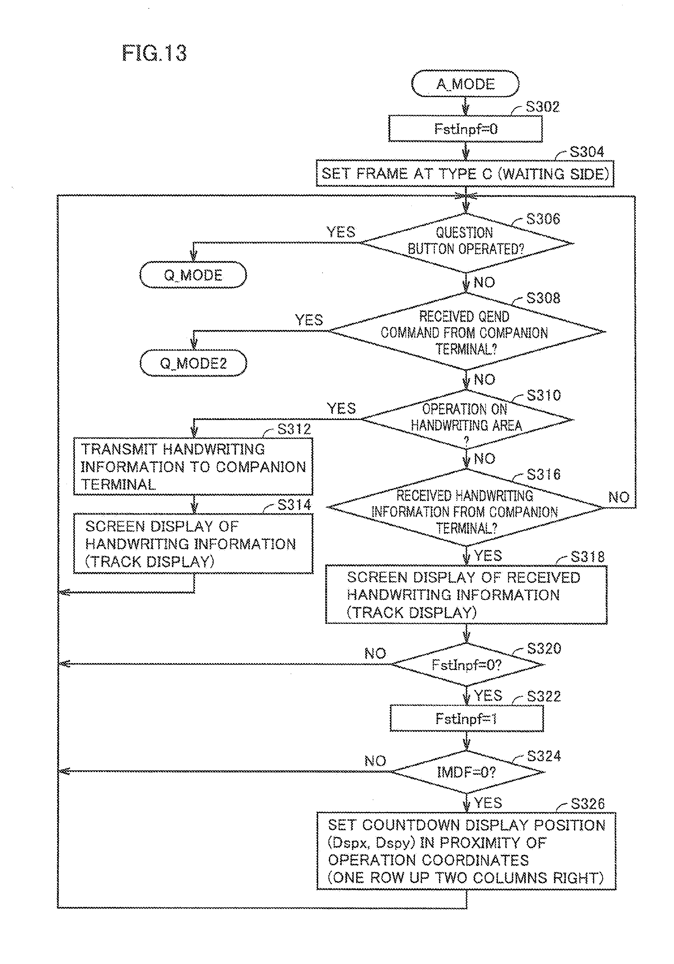

A procedure of a first waiting mode process at mobile phone 100 of the present embodiment will be described hereinafter. Fig. 13 is a flowchart of a procedure of a first waiting mode process at mobile phone 100 according to the present embodiment.

Referring to Fig. 13, processor 106 inserts 0 into FstInpf in memory 103 (step S302). As shown in Fig. 3 (D), processor 106 causes display 107 to show frame image 1035 for the first waiting mode (step S304).

Processor 106 determines whether the question button has been operated or not via tablet 119 (step S306). When the question button has been operated via tablet 119 (YES at step S306), processor 106 moves to the first input mode (Q_MODE). When the question button was not operated at tablet 119 (NO at step S306), processor 106 determines whether a QEND command has been received from the companion terminal via communication device 101 (step S308). When a command QEND has been received from the companion terminal (YES at step S308), processor 106 moves to the second input mode (Q_MODE 2). When a QEND command was not received from the companion terminal (NO at step S308), processor 106 determines whether the user has manipulated the handwriting area on tablet 119 (step S310). Specifically, processor 106 determines whether handwriting input has been accepted or not.

When handwriting input has been accepted (YES at step S310), processor 106 transmits the handwriting information corresponding to the accepted handwriting input to the companion terminal via communication device 101 (step S312). Processor 106 causes display 107 to show the handwritten image based on the handwriting information (step S314). Processor 106 repeats the process from step S306.

When handwriting input was not accepted (NO at step S310), processor 106 determines whether handwriting information has been received from the companion terminal via communication device 101 (step S316). When handwriting information was not accepted from the companion terminal (NO at step S316), processor 106 repeats the process from step S306. When handwriting information has been received from the companion terminal (YES at step S316), processor 106 causes display 107 to show a handwritten image based on the received handwriting information (step S318).

Processor 106 determines whether 0 is inserted in FstInpf in memory 103 (step S320). When 0 is not inserted in FstInpf (NO at step S320), processor 106 repeats the process from step S306. When 0 is inserted in FstInpf (YES at step S320), processor 106 inserts 1 into FstInpf (step S322).

Processor 106 determines whether 0 is inserted in IMDF in memory 103 (step S324). When 0 is not inserted in IMDF (NO at step S324), processor 106 repeats the process from step S306.

When 0 is inserted in IMDF (YES at step S324), processor 106 sets the coordinates in the proximity of the position where handwriting input was accepted as the countdown display position (Dspx, Dspy) (step S326). Processor 106 repeats the process from step S306.

### <Second Input Mode and Second Waiting Mode>

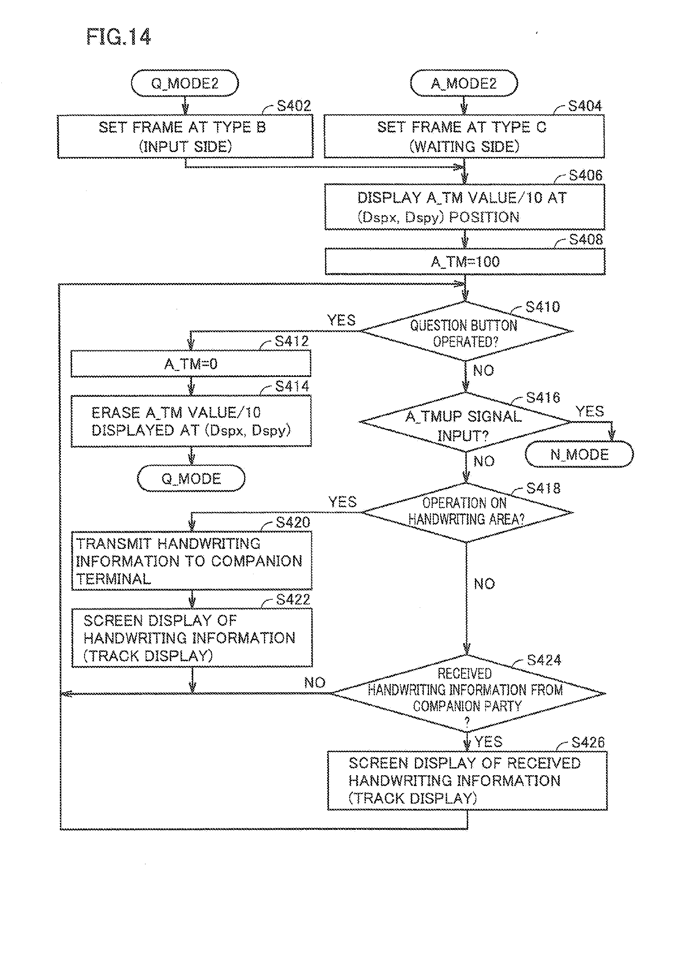

A procedure of a second input mode and second waiting mode process at mobile phone 100 of the present embodiment will be described hereinafter. Fig. 14 is a flowchart of a procedure of a second input mode and second waiting mode process at mobile phone 100 according to the present embodiment.

Referring to Fig. 14, in the second input mode, processor 106 causes display 107 to show a frame image for the second input mode (here, frame image 1034 for the first input mode) (step S402). Then, processor 106 causes display 107 to show a number of the value stored in A_TM in memory 103 divided by 10 at countdown display position (Dspx, Dspy) (step S406).

In the second waiting mode, processor 106 causes display 107 to show a frame image for the second waiting mode (here, frame image 1035 for the first waiting mode) (step S404). Then in a similar manner, processor 106 causes display 107 to show a number of the value stored in A_TM in memory 103 divided by 10 at countdown display position (Dspx, Dspy) (step S406).

Processor 106 inserts 100 into A_TM in memory 103 (step S408). Processor 106 determines whether the question button at tablet 119 has been manipulated or not (step S410).

When the question button has been manipulated (YES at step S410), processor 106 inserts 0 into A_TM in memory 103 (step S412). Processor 106 erases the number of the value of A_TM divided by 10, displayed at the countdown display position (Dspx, Dspy) (step S414). Processor 106 moves to the first input mode (Q_MODE).

When the question button has not been manipulated (NO at step S410), processor 106 determines whether signal A_TMUP has been input or not from the 0.1-sec.timer-interruption (SECTIMER) function (step S416). When there is an input of signal A_TMUP from the 0.1-sec.timer-interruption (SECTIMER) function (YES at step S416), processor 106 moves to a normal P2P mode (N_MODE), as shown in Fig. 4 (I) and (J).

When signal A_TMUP is not input from the 0.1-sec.timer-interruption (SECTIMER) function (NO at step S416), processor 106 determines whether the user has manipulated the handwriting area on tablet 119 (step S418). Namely, processor 106 determines whether handwriting input has been accepted or not.

When handwriting input has been accepted (YES at step S418), processor 106 transmits the accepted handwriting information to the companion terminal via communication device 101 (step S420). As shown in Fig. 4 (A)-(H), processor 106 causes display 107 to show a handwritten image based on the handwriting information (step S422). Processor 106 repeats the process from step S410.

When handwriting input has not been accepted (NO at step S418), processor 106 determines whether handwriting information has been received from the companion terminal via communication device 101 (step S424). When handwriting information has not been received from the companion terminal (NO at step S424), processor 106 repeats the process from step S410.

When handwriting information has been received from the companion terminal (YES at step S424), processor 106 causes display 107 to show a handwritten image based on the received handwriting information (step S426). Then, processor 106 repeats the process from step S410.

### < Process of 0.1-sec.timer-interruption >

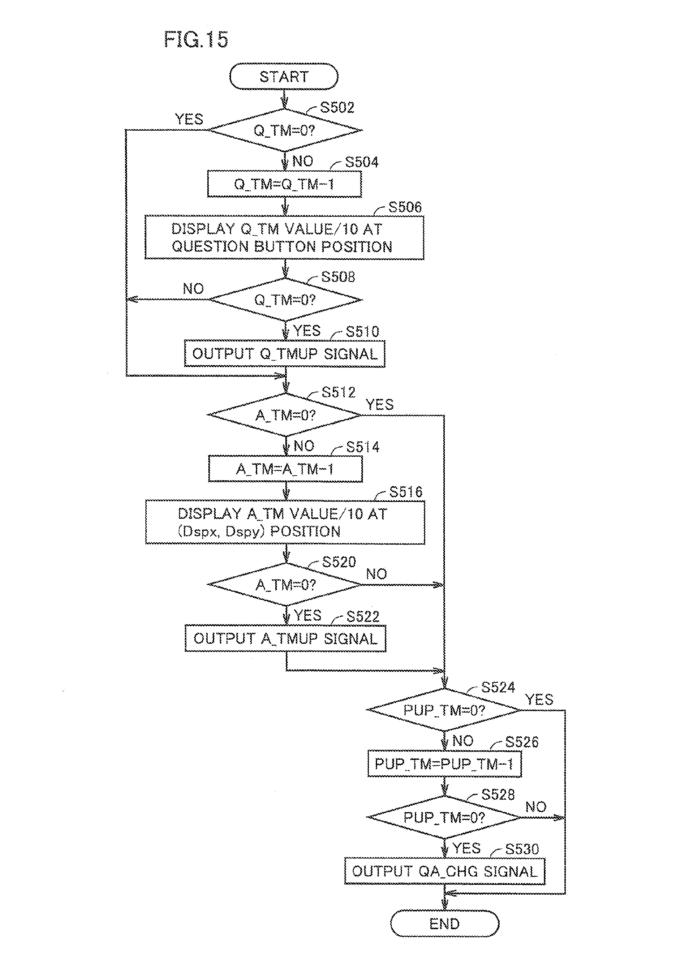

A procedure of a 0.1-sec.timer-interruption process at mobile phone 100 of the present embodiment will be described hereinafter. Fig. 15 is a flowchart of a procedure of a 0.1-sec.timer-interruption process at mobile phone 100 according to the present embodiment.

Referring to Fig. 15, processor 106 determines whether 0 is inserted in Q_TM in memory 103 at every elapse of 0.1 second by referring to clock 105 (step S502). When 0 is inserted in Q_TM (YES at step S502), processor 106 repeats the process from step S512. When 0 is not inserted in Q_TM (NO at step S502), processor 106 decrements the Q_TM in memory 103 (step S504).

As shown in Fig. 3 (B), processor 106 causes display 107 to show a number of the value stored in Q_TM divided by 10, at the position where the question button is displayed (step S506). Processor 106 determines whether 0 is inserted in Q_TM in memory 103 (step S508). When 0 is not inserted in Q_TM (NO at step S508), processor 106 repeats the process from step S512. When 0 is inserted in Q_TM (YES at step S508), processor 106 functioning as the 0.1-sec.timer-interruption (SECTIMER) outputs a signal Q_TMUP (step S510).

Processor 106 determines whether 0 is inserted in A_TM in memory 103 (step S512). When 0 is inserted in A_TM (YES at step S512), processor 106 repeats the process from step S524.

When 0 is not inserted in A_TM (NO at step S512), processor 106 decrements the A_TM in memory 103 (step S514). As shown in Fig. 3 (I), processor 106 causes display 107 to show a number of the value stored in A_TM divided by 10 at the countdown display position (Dspx, Dspy) (step S516).

Processor 106 determines whether 0 is inserted in A_TM in memory 103 (step S520). When 0 is not inserted in A_TM (NO at step S520), processor 106 repeats the process from step S524. Processor 106 functioning as the 0.1-sec.timer-interruption (SECTIMER) outputs a signal A_TMUP (step S522) when 0 is inserted in A_TM (when YES at step S520).

Processor 106 determines whether 0 is inserted in PUP_TM in memory 103 (step S524). When 0 is inserted in PUP_TM (YES at step S524), processor 106 ends the timer interruption process and waits for the elapse of the next 0.1 second. When 0 is not inserted in PUP_TM (NO at step S524), processor 106 decrements PUP_TM (step S526).

Processor 106 determines whether PUP_TM is 0 or not (step S528). When PUP_TM is not 0 (NO at step S528), processor 106 ends the timer interruption process and waits for the elapse of the next 0.1 second. Processor 106 functioning as the 0.1-sec.timer-interruption (SECTIMER) outputs a signal QA_CHG (step S530) when 0 is inserted in PUP_TM (when YES at step S528). Then, processor 106 ends the timer interruption process, and waits for the elapse of the next 0.1 second.

### <First Application Example>

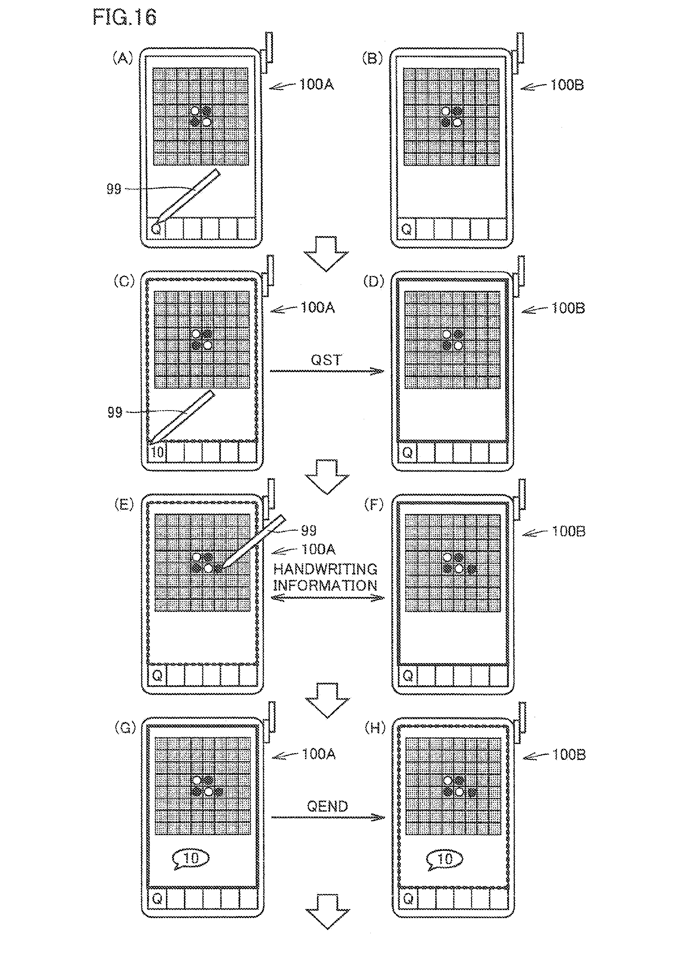

A first application example of network system 1 of the present embodiment will be described hereinafter. Figs. 16-18 are illustrations of the transition of the display states of first and second mobile phones 100A and 100B during P2P communication in a first application example of network system 1 of the present embodiment. With reference to Figs. 16-18 hereinafter, the transition of the display states of first mobile phone 100A and second mobile phone 100B, particularly, will be described. The present application example corresponds to the case employing an image of a board used in an Othello game as the underlying image.

Specifically, Fig. 16 (A) is a first illustration of the display state of first mobile phone 100A during a normal P2P communication. Fig. 16 (B) is a first illustration of the display state of second mobile phone 100B during a normal P2P communication.

Fig. 16 (C) is a first illustration of the display state of first mobile phone 100A during a first input mode. Fig. 16 (D) is a first illustration of the display state of second mobile phone 100B during a first waiting mode. Fig. 16 (E) is a second illustration of the display state of first mobile phone 100A during a first input mode. Fig. 16 (F) is second illustration of the display state of second mobile phone 100B during a first waiting mode. Fig. 16 (G) is a first illustration of the display state of first mobile phone 100A during a second waiting mode. Fig. 16 (H) is a first illustration of the display state of second mobile phone 100B during a second input mode.

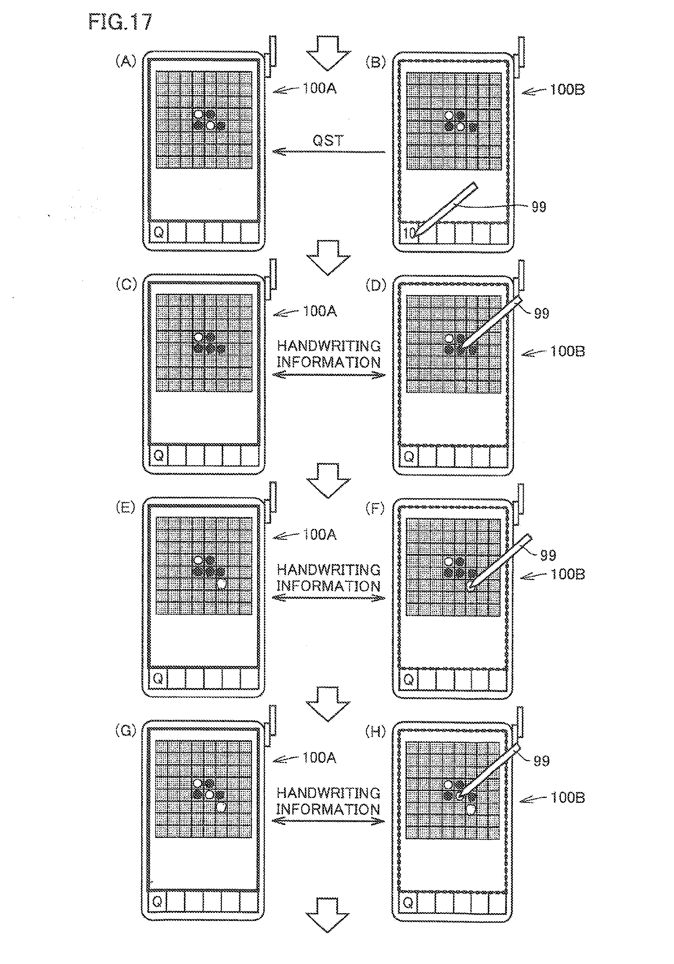

Fig. 17 (A) is a first illustration of the display state of first mobile phone 100A during a first waiting mode. Fig. 17 (B) is a first illustration of the display state of second mobile phone 100B during a first input mode. Fig. 17 (C) is a second illustration of the display state of first mobile phone 100A during a first waiting mode. Fig. 17 (D) is a second illustration of the display state of second mobile phone 100B during a first input mode. Fig. 17 (E) is a third illustration of the display state of first mobile phone 100A during a first waiting mode. Fig. 17 (F) is a third illustration of the display state of second mobile phone 100B during a first input mode. Fig. 17 (G) is a fourth illustration of the display state of first mobile phone 100A during a second waiting mode. Fig. 17 (H) is a fourth illustration of the display state of second mobile phone 100B during a second input mode.

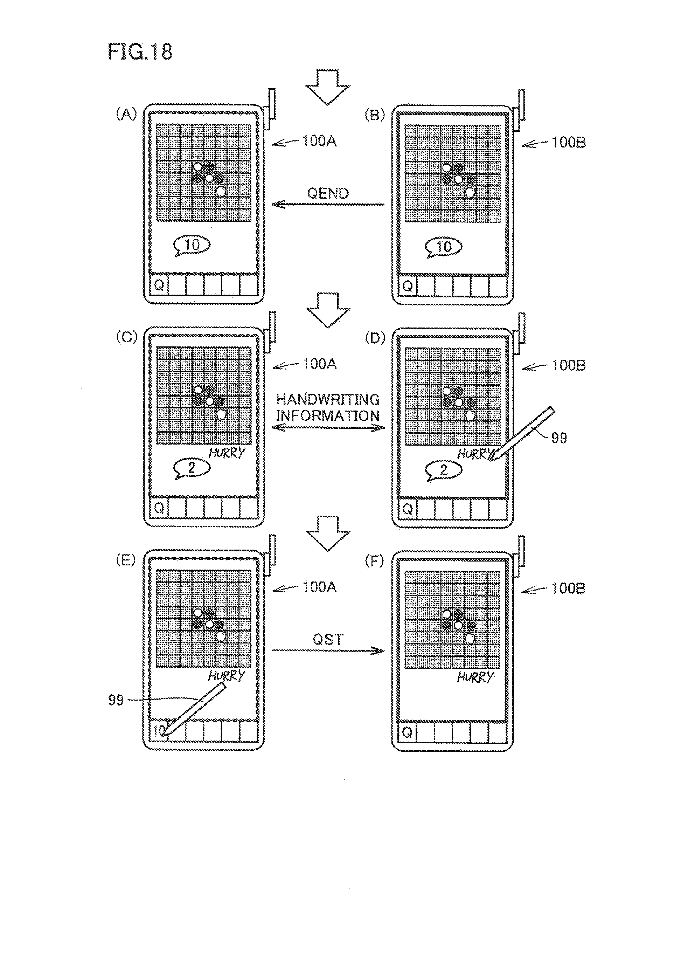

Fig. 18 (A) is a first illustration of the display state of first mobile phone 100A during a second input mode. Fig. 18 (B) is a first illustration of the display state of second mobile phone 100B during a second waiting mode. Fig. 18 (C) is a second illustration of the display state of first mobile phone 100A during a second input mode. Fig. 18 (D) is a second illustration of the display state of second mobile phone 100B during a second waiting mode. Fig. 18 (E) is a third illustration of the display state of first mobile phone 100A during a second input mode. Fig. 18 (F) is a third illustration of the display state of second mobile phone 100B during a second waiting mode.

As shown in Fig. 16 (A) and (B), in a normal P2P mode, first mobile phone 100A and second mobile phone 100B display a normal chat screen, i.e. a normal P2P mode frame image 1033B (refer to Fig. 9). When the user of first mobile phone 100A depresses the question button at display 107 under this state, first mobile phone 100A moves to the first input mode shown in Fig. 16 (C).

As shown in Fig. 16 (C), in the first input mode, first mobile phone 100A modifies the chat frame of display 107 to frame image 1034B (refer to Fig. 9).

Second mobile phone 100B moves to the first waiting mode in response to receiving a QST command. As shown in Fig. 16 (D), in the first waiting mode, second mobile phone 100B modifies the chat frame of display 107 to frame image 1035B (refer to Fig. 9).

Then, as shown in Fig. 16 (E) and (F), first mobile phone 100A and second mobile phone 100B sequentially display a handwritten image corresponding to the handwriting input accepted by first mobile phone 100A and a handwritten image corresponding to the handwriting input accepted by second mobile phone 100B. Then, in the case where first mobile phone 100A in the first input mode does not accept handwriting input for a predetermined period of time, i.e. at an elapse of a predetermined time from the pickup of stylus pen 99 from tablet 119, first mobile phone 100A moves to the second waiting mode, as shown in Fig. 16 (G).

As shown in Fig. 16 (G), in the second waiting mode, first mobile phone 100A modifies the chat frame of display 107 to frame image 1035B. In the transition to the second waiting mode, first mobile phone 100A transmits a message notifying that the first input mode has ended, i.e. transition to the second waiting mode (QEND command), to second mobile phone 100B. In the second waiting mode set forth below, first mobile phone 100A causes display 107 to show an image for the countdown of the remaining time of a second predetermined time.

Second mobile phone 100B moves to the second input mode in response to receiving a QEND command. As shown in Fig. 16 (H), in the second input mode, second mobile phone 100B modifies the chat frame of display 107 to frame image 1034. In the second input mode, second mobile phone 100B displays an image for the countdown of the remaining time of the second predetermined time at display 107.

When the user of second mobile phone 100B depresses the question button at display 107 under this state, second mobile phone 100B moves to the first input mode shown in Fig. 17 (B). In a manner similar to that set forth above, in the first input mode, second mobile phone 100B modifies the chat frame of display 107 to frame image 1034B, as shown in Fig. 17 (B). When moving to the first input mode, second mobile phone 100B transmits to first mobile phone 100A a message (QST command) notifying transition to the first input mode. In the first input mode, second mobile phone 100B causes display 107 to show an image for the countdown of the remaining time of the first predetermined time until handwriting input is accepted.

First mobile phone 100A moves to the first waiting mode in response to receiving a QST command. As shown in Fig. 17 (A), in the first waiting mode, first mobile phone 100A modifies the chat frame of display 107 to frame image 1035B.

Then, as shown in Fig. 17 (C) and (H), first mobile phone 100A and second mobile phone 100B sequentially display a handwritten image corresponding to the handwriting input accepted by first mobile phone 100A and a handwritten image corresponding to the handwriting input accepted by second mobile phone 100B. Then, in the case where second mobile phone 100B in the first input mode does not accept handwriting input for a predetermined period of time, i.e. at an elapse of a predetermined time from the pickup of stylus pen 99 from tablet 119, second mobile phone 100B moves to the second waiting mode, as shown in Fig. 18 (B).

As shown in Fig. 18 (B), in the second waiting mode, second mobile phone 100B modifies the chat frame of display 107 to frame image 1035B. In the transition to the second waiting mode, second mobile phone 100B transmits a message notifying that the first input mode has ended, i.e. transition to the second waiting mode (QEND command), to first mobile phone 100A. In the second waiting mode set forth below, second mobile phone 100B causes display 107 to show an image for the countdown of the remaining time of the second predetermined time.

First mobile phone 100A moves to the second input mode in response to receiving a QEND command. As shown in Fig. 18 (A), in the second input mode, first mobile phone 100A modifies the chat frame of display 107 to frame image 1035B.

Then, as shown in Fig. 18 (C) and (D), first mobile phone 100A and second mobile phone 100B sequentially display a handwritten image corresponding to the handwriting input accepted by first mobile phone 100A and a handwritten image corresponding to the handwriting input accepted by second mobile phone 100B. During this stage, first mobile phone 100A causes display 107 to show an image for the countdown of the remaining time of the second predetermined time.

When the user of first mobile phone 100A depresses the question button at display 107 under this state, first mobile phone 100A moves to the first input mode again, as shown in Fig. 18 (E). Second mobile phone 100B moves to the first waiting mode again, as shown in Fig. 18 (F).

Thus, the communication terminal of the present application example allows the user to carry out communication smoothly with the other party. In other words, the user of the communication terminal can readily identify who has the current right in the chat since the user of the communication terminal can readily become aware whether ""she/he is the one in the state to input handwriting" or "the other party is the one in the state to input handwriting".

### <Second Application Example>

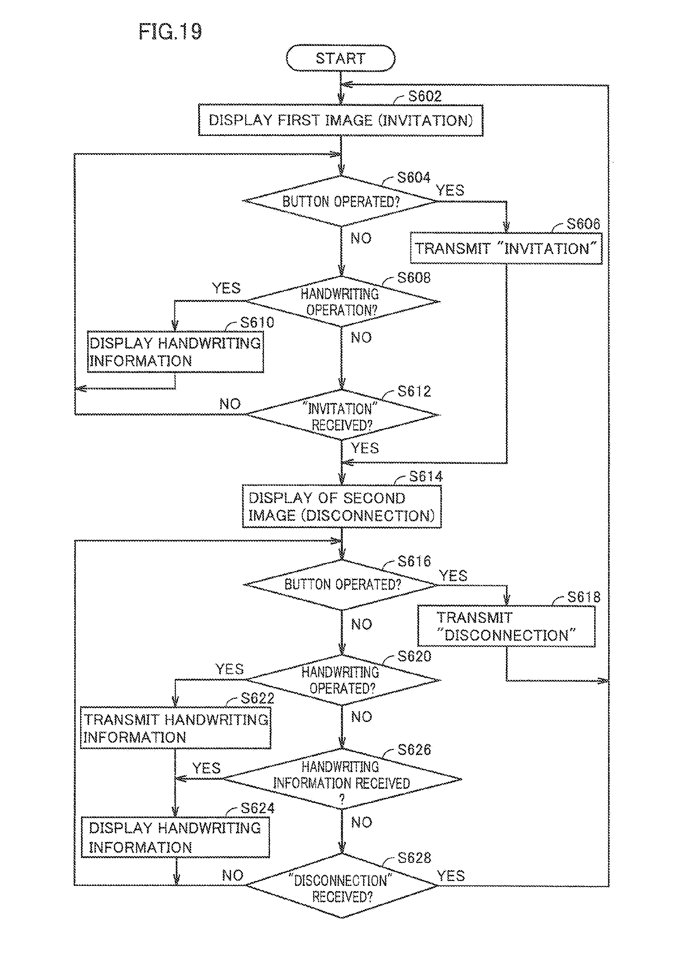

A second application example of network system 1 of the present embodiment will be described hereinafter. Fig. 19 is a flowchart of the procedure of a chat starting process (steps S602-S614) and an ending process (steps S614-S602).

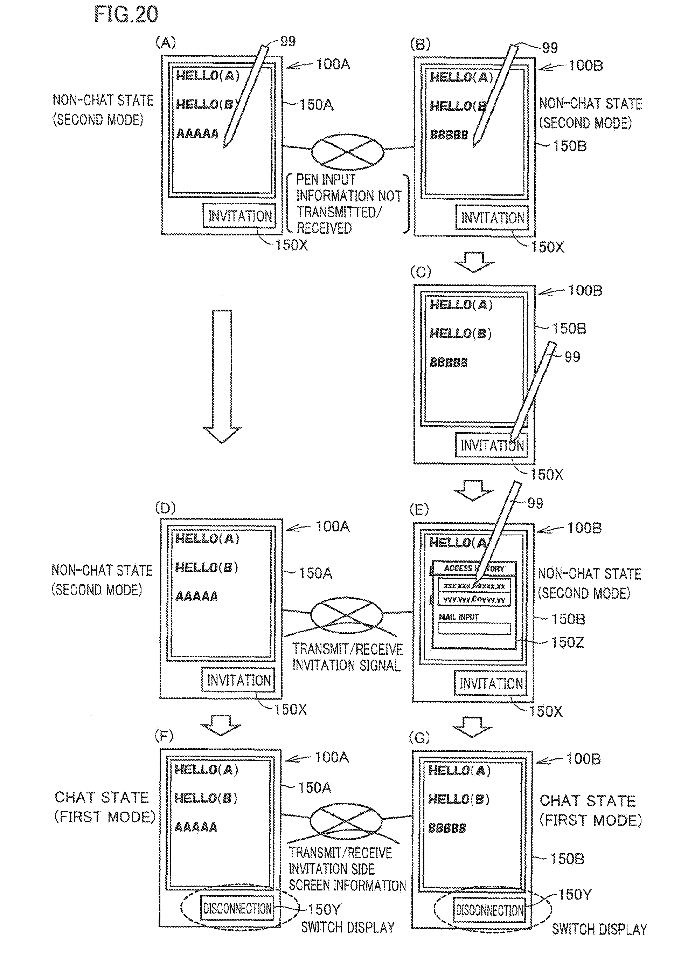

Fig. 20 is an illustration of the transition of the display states of first and second mobile phones 100A and 100B at the time of starting a chat at network system 1 of the present application example. Specifically, (A), (D), and (F) of Fig. 20 show the screen transition of touch panel 150A of first mobile phone 100A receiving an invitation of a chat communication from second mobile phone 100B. Specifically, (B), (C), (E) and (G) in Fig. 20 represent the screen transition of touch panel 150B of second mobile phone 100B inviting first mobile phone 100A to a chat communication.

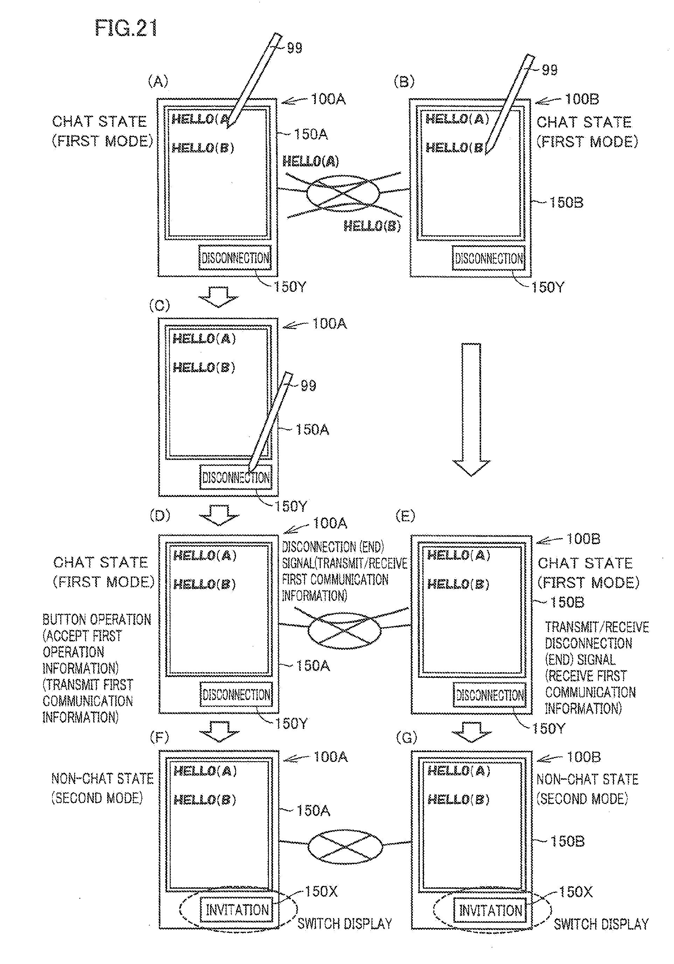

Fig. 21 is an illustration of the transition of display states of first and second mobile phones 100A and 100B at the time of ending the chat at network system 1 of the present application. Specifically, (A), (C), (D) and (F) of Fig. 21 represent the screen transition of touch panel 150A at first mobile phone 100A notifying second mobile phone 100B the termination of the chat communication. (B), (E) and (G) of Fig. 21 represent the screen transition of touch panel 150B at second mobile phone 100B receiving notification of the termination of chat communication from first mobile phone 100A.

Description will be provided hereinafter of the application of the approach related to network system 1 and mobile phone 100 according to the foregoing embodiments at the time of starting and ending a chat with reference to Figs. 19-21. The process and display contents at the time of starting a chat (corresponding to the matching process of Fig. 2) and ending a chat (corresponding to the disconnection process of Fig. 2) will be described in detail hereinafter.

As shown in Fig. 20 (A) and (B), processor 106 causes touch panel 150 to show an "invitation" button 150X (first image) to initiate a chat (step S602) when not currently conducting a chat with another mobile phone (first state). Processor 106 determines whether the user has depressed "invitation" button 150X using stylus pen 99 or the like via touch panel 150 (step S604). The first image may include both the input and display allowing the user to be aware that a chat is being started, or an icon, message, or a switch with a display device.

As shown in Fig. 20 (C)-(E), when a determination is made that the user has depressed the button (YES at step S604), processor 106 transmits information required for a chat (first information) to another mobile phone via communication device 101 (step S606). Specifically, as shown in Fig. 20 (E), processor 106 provides a chat companion selectable display at touch panel 150 based on an address book prestored in memory 103, as shown in Fig. 20 (E). Namely, processor 106 causes touch panel 150 to show a list 150Z of other parties capable of a chat. Processor 106 accepts a chat companion select command from the user via touch panel 150. The chat companion displayed at touch panel 150 may be displayed in a selectable manner based on the history information of the chat companion. The history information of the chat companion may be stored in memory 103 at the time of starting or ending the chat.

In further detail, as shown in Figs. 1 and 2, processor 106 requests IP registration (log in) from matching server 400 via communication device 101. Matching server 400 responds to the request to store the mail address of second mobile phone 100B in association with that IP address. Then, matching server 400 generates a room name based on the mail address of second mobile phone 100B and the mail address of first mobile phone 100A that has been selected, and transmits the room name to second mobile phone 100B. Processor 106 transmits to selected first mobile phone 100A an "invitation" mail (first information) including the relevant room name and the address from matching server 400 (step S606). In the present embodiment, processor 106 transmits via communication device 101 the "invitation" mail with the handwriting information indicating the handwritten image currently displayed at touch panel 150. The first information may be transmitted to second mobile phone 100B as an "invitation" mail including the mail address and IP address of first mobile phone 100A. Second mobile phone 100B receiving the first information may carry out chat communication by transmitting a "response" mail including the IP address of second mobile phone 100B to first mobile phone 100A.

Thus, as shown in Fig. 20 (G), mobile phone 100 can carry out chat communication with another selected mobile phone. Processor 106 causes touch panel 150 to show a "disconnection" button 150Y to end (disconnect) the chat (step S614).

When a determination is not made that the user has depressed the button (NO at step S604), processor 106 determines whether the user has input a handwriting command via touch panel 150 (step S608). When the user has input a handwriting command (YES at step S608), processor 106 causes touch panel 150 to show a handwritten image based on the handwriting command (step S610). Processor 106 repeats the process from step S604.

When the user has not input a handwriting command (NO at step S608), processor 106 determines whether an "invitation" mail has been received from the other mobile phone via communication device 101 (step S612). When an invitation mail has not been received from the other mobile phone (NO at step S612), processor 106 repeats the process from step S604.

When an invitation mail is received from the other mobile phone (YES at step S612), processor 106 accesses the room of matching server 400 included in the "invitation" mail via communication device 101 to obtain the IP address of the other mobile phone. As shown in Fig. 20 (F), processor 106 initiates chat communication with the other mobile phone via communication device 101 based on the IP address. Processor 106 causes touch panel 150 to show a "disconnection" button 150Y to end the chat (step S614). Processor 106 causes touch panel 150 to show a handwritten image based on the handwriting information included in the invitation mail.

As shown in Fig. 21 (A) and (B), processor 106 causes touch panel 150 to show a "disconnection" button 150Y (second image) to end the chat when currently carrying on a chat with the other mobile phone (second state) (step S614). Processor 106 determines whether "disconnection" button 150Y has been depressed by the user via touch panel 150 (step S616). The second image may include both the input and display allowing the user to be aware that a chat is to be ended, or an icon, message, or a switch with a display device.

As shown in Fig. 21 (C)-(E), when a determination is made that the user has depressed "disconnection" button 150Y (YES at step S616), processor 106 transmits information to end the chat (second information) to the other mobile phone via communication device 101 (step 618). At this stage, processor 106 may transmit a request message to delete the room to matching server 400 via communication device 101.

As shown in Fig. 21 (F), mobile phone 100 can end a chat communication. Processor 106 causes touch panel 150 to show "invitation" button 150X to initiate chat (step S602).

When a determination is not made that the user has depressed the button (NO at step S616), processor 106 determines whether the user has input a handwriting command via touch panel 150 (step S620). As shown in Fig. 21 (A) and (B), when the user has input a handwriting command (YES at step S620), processor 106 transmits handwriting information corresponding to the handwriting command via communication device 101 to the other mobile phone (step S622). Processor 106 causes touch panel 150 to display a handwritten image based on the handwriting command (step S624). Processor 106 repeats the process from step S616.

When the user did not input a handwriting command (NO at step S620), processor 106 determines whether handwriting information has been received or not from the other mobile phone via communication device 101 (step S626). As shown in Fig. 21 (A) and (B), when handwriting information is received from the other mobile phone (YES at step S626), processor 106 causes touch panel 150 to show the handwriting image based on the handwriting information (step S624). Processor 106 repeats the process from step S616.

When handwriting information is not received from the other mobile phone (NO at step S626), processor 106 determines whether information to end the chat has been received from the other mobile phone via communication device 101 (step S628). When information to end the chat has not been received from the other mobile phone (NO at step S628), processor 106 repeats the process from step S616.

When information to end the chat has been received from the other mobile phone (YES at step S628), processor 106 ends the chat communication via communication device 101, as shown in Fig. 21 (G). Processor 106 causes touch panel 150 to show "invitation" button 150X to initiate a chat (step S602).

### <Other Embodiments>

The present invention is also applicable to a case implemented by supplying a program to a system (for example, network system 1, or the like) or to a device (for example, mobile phone 100, or the like). The effect of the present invention can be exploited in a manner such that a storage medium (for example, memory 103) having stored therein a program represented by software directed to achieving the present invention is supplied to the system or device, and a computer (or a processor such as a CPU or MPU) of that system or device reads out and executes a program code stored in the storage medium.

In this case, the program code per se read out from the storage medium will implement the function of the above-described embodiments, and the storage medium storing the program code will constitute the present invention.

The storage medium for providing the program code can include, for example, a hard disk, an optical disk, a magneto-optical disk, a CD-ROM, a CD-R, a magnetic tape, a non-volatile memory card (IC memory card), a ROM (mask ROM, flash EEPROM), or the like).

The function of the above-described embodiment may be implemented, not only by a computer executing the program code read out, but also by performing the actual processing partially or entirely through an OS (operating system) or the like running on the computer. The present invention is intended to include the case where the function of the above-described embodiments is implement by such processing.

Furthermore, the program code read out from the storage medium may be written into a memory provided at a function extension board inserted into the computer or a function extension unit connected to the computer. Then, based on the instructions of the program code, the CPU or the like provided at the function extension board or function extension unit may perform the actual processing partially or entirely. The present invention is intended to also include the case where the function of the above-described embodiment is realized by such processing.

It should be understood that the embodiments disclosed herein are illustrative and non-restrictive in every respect. The scope of the present invention is defined by the appended claims, rather than the description set forth above, and all changes that fall within limits and bounds of the claims, or equivalence thereof are intended to be embraced by the claims.

### DESCRIPTION OF REFERENCE CHARACTERS

1 Network system; 99 stylus pen; 100, 100A, 100B mobile phone; 101 communication device; 102 GPS; 103 memory; 1031 several types of variables; 1032 underlying file; 1033 normal P2P mode frame image; 1034 frame image of first input mode; 1035 frame image of first waiting mode; 103A work memory; 103B display memory; 103C non-volatile memory; 104 switch; 105 clock; 106 processor (control unit); 1061 communication control unit; 1062 handwriting application; 1063 timer processing unit; 1064 first determination unit; 1065 second determination unit; 1066 switching unit; 1067 display control unit; 107 display; 109 speaker; 110 operation unit; 119 tablet; 150, 150A, 150B touch panel; 150X "invitation" button; 150Y "disconnection" button; 150Z chat capable terminal list; 200 car navigation device; 300 personal computer; 400 matching server; 500 Internet network; 700 carrier network.

## Claims

1. A communication terminal device (100) transmitting and receiving image information of one's own terminal to and from another terminal, said communication terminal device comprising:
a display (107) for displaying image information,
a communication device (101) for transmitting and receiving information to and from another terminal via a network,
an input device (119) for entering command information and image information, and
a processor (106) configured to perform a first control for causing said display to show, during display of a first image, a second image based on input of first command information from said input device, and transmitting first information to said other terminal via said communication device, and in response to receiving said first information from said other terminal via said communication device, causing said display to show said second image; and perform a second control for causing said display to show, during display of said second image, said first image based on input of second command information from said input device, and transmitting second information to said other terminal via said communication device, and in response to receiving said second information from said other terminal via said communication device, causing said display to show said first image.

2. A communication terminal device transmitting and receiving image information of one's own terminal to and from another terminal, said communication terminal device comprising:
a display for displaying image information,
a communication device for transmitting and receiving information to and from another terminal via a network,
an input device for entering command information and image information, and
a processor configured to perform a first control for causing said display to show, during display of a first image, a second image based on input of first command information from said input device, and transmitting first information to said other terminal via said communication device, and perform a second control for causing said display to show, during display of said second image, said first image based on input of second command information from said input device, and transmitting second information to said other terminal via said communication device.

3. The communication terminal device according to claim 2, wherein said processor
as said first control, transmits said first information to said other terminal via said communication device, based on an instruction to transmit said image information to said other terminal as said first command information input via said input device, and causes said display to show information indicating that a right to input an image to be transmitted is at its own terminal as said second image, and
as said second control, transmits said second information to said other terminal via said communication device based on an instruction to move the right to input an image to be transmitted as said second command information input via said input device, and causes said display to show information indicating that the right to input an image to be transmitted is at said other terminal as said first image.

4. The communication terminal device according to claim 3, wherein said processor
transmits, during display of said first and second images, first handwriting information corresponding to handwriting input from said input device via said communication device to said other terminal, and receives second handwriting information from said other terminal via said communication device, and
causes, during display of said first and second images, said display to show first and second handwritten images based on first and second handwriting information, respectively.

5. The communication terminal device according to claim 3 or 4, wherein said processor
determines whether duration of said first image being displayed has come to a first predetermined time, and
when the duration of said first image being displayed has come to said first predetermined time, causes said display to show a third image.

6. The communication terminal device according to claim 5, wherein said processor causes said display to show a countdown of a difference between said first predetermined time and the duration of said first image being displayed.

7. The communication terminal device according to any of claims 3-6, wherein said processor
determines whether duration of said command not being input to said input device has come to a second predetermined time, during display of said first image, and
when the duration of said command not being input to said input device has come to said second predetermined time, causes said display to show a fourth image.

8. The communication terminal device according to claim 7, wherein said processor causes said display to show a countdown of a difference between said second predetermined time and the duration of said command not being input to said input device.

9. A communication terminal device transmitting and receiving image information of one's own terminal to and from another terminal, said communication terminal device comprising:
a display for displaying image information,
a communication device for transmitting and receiving information to and from another terminal via a network, and
a processor configured to perform a first control for causing said display to show, in response to receiving first information from another terminal via said communication device during display of a first image, a second image, and perform a second control for causing said display to show said first image in response to receiving said second information from said other terminal via said communication device during display of said second image.

10. A communication terminal device transmitting and receiving image information of one's own terminal to and from another terminal, said communication terminal device comprising:
a display for displaying image information,
a communication device for transmitting and receiving information to and from another terminal via a network,
an input device for entering command information and image information, and
a processor configured to perform a first control for transmitting, by accepting an operation on a first image and selection of a connection terminal via said input device, during display of said first image, first information to said connection terminal via said communication device, and causing said display to show a second image, and perform a second control for transmitting, by accepting an operation on said second image via said input device, during display of said second image, second information to said connection terminal via said communication device, and causing said display to show said first image.

11. A communication method for a communication terminal device including a display, a communication device, an input device, and a processor, said communication method comprising the steps of:
causing, during display of a first image, said display to show a second image based on input of first command information from said input device, and transmitting first information to another terminal via said communication device, by said processor;
in response to receiving said first information from said other terminal via said communication device, causing said display to show said second image, by said processor;
causing said display to show said first image based on input of second command information from said input device during display of said second image, and transmitting second information to said other terminal via said communication device, by said processor; and
in response to receiving said second information from said other terminal via said communication device, causing said display to show said first image, by said processor.

12. A communication program for causing communication by a communication terminal device including a display, a communication device, an input device and a processor, said communication program causing said processor to execute the steps of:
causing, during display of a first image, said display to show a second image based on input of first command information from said input device, and transmitting first information to said other terminal via said communication device;
in response to receiving said first information from said other terminal via said communication device, causing said display to show said second image;
causing said display to show said first image based on input of second command information from said input device during display of said second image, and transmitting second information to said other terminal via said communication device; and
in response to receiving said second information from said other terminal via said communication device, causing said display to show said first image.
